# EUROPEAN PATENT APPLICATION

(11) **EP 3 460 880 A1**
(43) Date of publication of application: **27.03.2019**
(21) Application number: 18159131.4
(22) Date of filing: 28.02.2018
(51) Int. Cl.: H01M 4/02

(54) **ANODE COMPOSITION COMPRISING RUTILE-TYPE COATED LITHIUM TITATANTE PARTICLES**

(30) Priority: 21.09.2017 JP 2017180798
(71) Applicant: KABUSHIKI KAISHA TOSHIBA, Minato-ku Tokyo 105-8001 (JP)
(72) Inventor: Yamashita, Yasunobu, Tokyo, 105-8001 (JP); Matsuno, Shinsuke, Tokyo, 105-8001 (JP); Takami, Norio, Tokyo, 105-8001 (JP); Inagaki, Hiroki, Tokyo, 105-8001 (JP)
(74) Representative: Hoffmann Eitle

(57) **Abstract**

According to one approach, a secondary battery including a positive electrode (2), a negative electrode (6), and an electrolyte is provided. The negative electrode (6) contains a negative electrode active material. The negative electrode active material includes titanium-containing metal oxide particles, an anatase type TiO₂ phase, and a solid electrolyte phase. Each of the anatase type TiO₂ phase and the solid electrolyte phase is disposed on at least a portion of a surface of the titanium-containing metal oxide particles. The electrolyte contains an electrolyte salt and water.

## Description

### FIELD

The present disclosure relates to a secondary battery, a battery pack, and a vehicle.

### BACKGROUND

In a nonaqueous electrolyte secondary battery in which charge and discharge is performed by migration of Li ions between a negative electrode and a positive electrode, nonaqueous electrolyte including a nonaqueous solvent is used as an electrolyte. The nonaqueous solvent has a wide potential stability, and thus the nonaqueous electrolyte secondary battery can exhibit a high cell voltage of about 3 V to 4 V. Therefore, the nonaqueous electrolyte battery has an energy density of greater excellence compared to that of conventional storage batteries. Accordingly, use of the nonaqueous electrolyte secondary battery has recently increased in a wide range of uses including for onboard use such as µHEV (micro-hybrid electric vehicle) or an idling stop system (a.k.a., automatic start-stop system), and for stationary use.

The nonaqueous solvent included in the nonaqueous electrolyte, however, is an organic solvent, and thus has high volatility and inflammability. Therefore, there lies danger in the nonaqueous electrolyte secondary battery, such as risk of igniting accompanied by overcharge, temperature rise or impact. As a measurement against such danger, it has been proposed to use a water-based solvent in the lithium ion secondary battery.

### BRIEF DESCRIPTION OF THE DRAWINGS

FIG. 1 is a schematic cross-sectional view showing a coin-type secondary battery, which is one example according to an approach;
FIG. 2 is a schematic cross-sectional view showing a square-type secondary battery, which is one example according to an approach;
FIG. 3 is a schematic cross-sectional view showing a side surface of the square-type secondary battery in FIG. 2;
FIG. 4 is a perspective view showing a battery module, which is one example according to an approach;
FIG. 5 is an exploded perspective view showing a battery pack, which is one example according to an approach;
FIG. 6 is a block diagram showing an electric circuit of the battery pack in FIG. 5;
FIG. 7 is a cross-sectional view schematically showing an example of a vehicle according to an approach; and
FIG. 8 is a schematic view showing another example of a vehicle according to an approach.

### DETAILED DESCRIPTION

According to one approach, a secondary battery including a positive electrode, a negative electrode, and an electrolyte is provided. The negative electrode contains a negative electrode active material. The negative electrode active material includes titanium-containing metal oxide particles, an anatase type TiO₂ phase, and a solid electrolyte phase. Each of the anatase type TiO₂ phase and the solid electrolyte phase is disposed on at least a portion of a surface of the titanium-containing metal oxide particles. The electrolyte contains an electrolyte salt and water.

According to another approach, provided is a battery pack including the secondary battery (or secondary batteries) according to the above approach.

According to a further other approach, provided is a vehicle including the battery pack according to the above approach.

According to the approaches, there is provided a secondary battery having high safety and exhibiting high energy density while having suppressed self-discharge, a battery pack including this secondary battery, and a vehicle including this battery pack.

The approaches are explained below, with reference to drawings.

### (First Approach)

A secondary battery according to the approach includes a positive electrode, a negative electrode, and an electrolyte. The negative electrode contains a negative electrode active material. The negative electrode active material includes titanium-containing metal oxide particles, an anatase type TiO₂ phase, and a solid electrolyte phase. The anatase type TiO₂ phase and the solid electrolyte phase are arranged on at least a portion of the surface of the titanium-containing metal oxide particles. The electrolyte contains an electrolyte salt and water.

When an electrolyte including a water-based solvent is used in view of safety, it is difficult to obtain a battery voltage of about 3 to 4 V, which is obtained in a nonaqueous lithium ion secondary battery (a nonaqueous electrolyte secondary battery). When the water-based solvent is used, there may be used in some cases a negative electrode material having a relatively high operating potential such as LiV₂O₄ or LiTi₂(PO₄)₃, in order to avoid hydrogen generation due to electrolysis at the negative electrode. In such a case, the battery voltage of the aqueous lithium ion secondary battery reaches only about 2 V, and the energy density is lower than that of the nonaqueous lithium ion secondary battery.

When a negative electrode material having a low operating potential such as Li₄Ti₅O₁₂ is used in order to increase the battery voltage of the aqueous lithium ion secondary battery, the hydrogen generation at the negative electrode becomes significant, and the safety rather becomes reduced. In addition to that, capacity reduction due to self-discharge that occurs due to low operating potential becomes a problem.

The negative electrode active material contained in the negative electrode of the secondary battery according to the approach includes titanium-containing metal oxide particles in which the anatase type TiO₂ phase and the solid electrolyte phase are arranged on the surface, and the electrolyte contains water. With this configuration, even when the titanium-containing metal oxide particle contains a negative electrode material having a low operating potential such as a spinel type lithium titanium oxide Li₄Ti₅O₁₂, it is possible to suppress self-discharge due to extraction of lithium ions from the negative electrode active material and generation of hydrogen due to the reductive decomposition of water in the electrolyte associated with the self-discharge. When an anatase type TiO₂ phase having a relatively high reaction potential (being noble) among titanium-containing oxides and a solid electrolyte phase not directly contributing to charge and discharge are located at an interface between the titanium-containing metal oxide particles and an electrolyte containing water, the potential at the contact interface between water and an active material becomes higher than the reaction potential of the material of the titanium-containing metal oxide particles. Thus, self-discharge and hydrogen generation are suppressed even when a titanium-containing oxide having low operating potential (being base) is used for titanium-containing metal oxide particles. Since the potential of the titanium-containing oxide used for the titanium-containing metal oxide particle is low, the battery voltage can be increased, and a high energy density may be obtained. Thus, with the above configuration, it is possible to exhibit a high energy density while ensuring safety and suppressed self-discharge.

A preferred approach of the negative electrode active material includes a solid electrolyte phase and titanium-containing metal oxide particles, the particles containing a titanium-containing oxide phase and an anatase type TiO₂ phase. The anatase type TiO₂ phase is located at the surface of the titanium-containing metal oxide particles and relatively uniformly distributed on the particle surface. The solid electrolyte phase is distributed on the titanium-containing metal oxide particles, more specifically further on the outer side than the anatase type TiO₂ phase, for example, in island-patch manner. At a position where the solid electrolyte phase is present, a sandwich structure in which the anatase type TiO₂ phase is sandwiched between the titanium-containing oxide phase and the solid electrolyte phase is formed. The titanium-containing oxide phase, the anatase type TiO₂ phase, and the solid electrolyte phase may compose composite particle(s) .

The titanium-containing metal oxide particle includes, as a parent phase, a titanium-containing oxide phase containing a titanium-containing oxide. Examples of the titanium-containing oxide include an oxide of titanium, a lithium titanium oxide, a niobium-titanium oxide, and a sodium niobium-titanium oxide. The Li insertion potential into the titanium-containing oxide is desirably in a range of 1 V (vs. Li/Li⁺) or more and 3 V (vs. Li/Li⁺) or less (-2.29 V (vs. SCE) or more and 0.29 V (vs. SCE) or less). The negative electrode active material may include as the titanium-containing oxide phase, one of the titanium-containing oxides, or include as the titanium-containing oxide phase, two or more of the titanium-containing oxides.

Examples of the oxide of titanium include an oxide of titanium having a monoclinic structure and an oxide of titanium having a rutile structure. For the oxide of titanium having each crystal structure, the composition before charging may be represented by TiO₂, and the composition after charging may be represented by LiₓTiO₂ for which x is 0 ≤ x ≤ 1. The structure before charging for the oxide of titanium having the monoclinic structure may be represented by TiO₂(B).

Examples of the lithium-titanium oxide include a lithium-titanium oxide having a spinel structure (for example, the general formula: Li₄₊ₓTi₅O₁₂ for which x is -1 ≤ x ≤ 3), a lithium-titanium oxide having a ramsdellite structure (for example, Li₂₊ₓTi₃O₇ for which -1 ≤ x ≤ 3), Li₁₊ₓTi₂O₄ for which 0 ≤ x ≤ 1, Li_{1.1+x}Ti_{1.8}O₄ for which 0 ≤ x ≤ 1, Li_{1.07+x}Ti_{1.86}O₄ for which 0 ≤ x ≤ 1, and LiₓTiO₂ for which 0 < x ≤ 1, and the like. The lithium-titanium oxide includes, for example, a lithium-titanium composite oxide in which a dopant is introduced into the above lithium-titanium oxide having the spinel structure or the ramsdellite structure.

Examples of the niobium-titanium oxide include oxides represented by LiₐTiM_{b}Nb_{2±β}O_{7±σ} for which 0 ≤ a ≤ 5, 0 ≤ b ≤ 0.3, 0 ≤ β ≤ 0.3, 0 ≤ σ ≤ 0.3, and M is at least one selected from the group consisting of Fe, V, Mo, and Ta.

Examples of the sodium-niobium-titanium oxide include an orthorhombic Na-containing niobium-titanium-composite oxide represented by the general formula Li₂₊ᵥNa_{2-w}M1ₓTi_{6-y-x}Nb_{y}M2_{z}O_{14+δ} for which 0 ≤ v ≤ 4, 0 < w < 2, 0 ≤ x < 2, 0 < y < 6, 0 ≤ z < 3, y + z < 6, -0.5 ≤ δ ≤ 0.5, M1 includes at least one selected from the group consisting of Cs, K, Sr, Ba, and Ca, and M2 includes at least one selected from the group consisting of Zr, Sn, V, Ta, Mo, W, Fe, Co, Mn, and Al.

The titanium-containing oxide contained in the titanium-containing oxide phase preferably contains one or two or more of lithium titanium oxide, niobium-titanium composite oxide, and sodium niobium-titanium oxide.

The anatase type TiO₂ phase in the titanium-containing metal oxide particle is located at the surface of the particle. The anatase type TiO₂ phase may be, for example, a layer covering the surface of the titanium-containing oxide particle as a titanium-containing oxide phase. The anatase type TiO₂ phase is preferably a layer having a thickness of 1 nm or more and 50 nm or less. By virtue of the anatase type TiO₂ layer within this thickness range, the side reaction inhibition effect on the surface of the titanium-containing metal oxide particle can be expected without inhibiting charge and discharge of the titanium-containing oxide as the parent phase. When the thickness is less than 1 nm, it is difficult to sufficiently suppress the reductive decomposition of water on the surface of the titanium-containing metal oxide particles. On the other hand, when the thickness exceeds 50 nm, charge and discharge of the parent phase titanium-containing oxide may be inhibited.

It is desirable that the distribution of the anatase type TiO₂ phase on the particle surface is dense and uniform. The anatase type TiO₂ phase densely covers the surface of the titanium-containing oxide particles, whereby suppression of self-discharge from the surface of the titanium-containing oxide particles can be expected.

The titanium-containing metal oxide particles preferably have an average secondary particle diameter of 500 nm or more and 50 µm or less. The secondary particles herein refer not to an electrostatically cohesive state but to an agglomerate of titanium-containing metal oxide particles physically bound.

The solid electrolyte phase contains a solid electrolyte including at least one selected from the group consisting of a NASICON type structural compound represented by Li₁₊ₓM1ₓM2₂₋ₓ(PO₄)₃ for which Ml is Al, M2 is at least one selected from the group consisting of Ge and Ti, and 0.05 ≤ x ≤ 0.5, LiMO₃ for which M is at least one selected from the group consisting of Nb and La, a compound having a perovskite structure represented by Ln_{2/3-x}Li₃ₓTiO₃ for which Ln is at least one selected from the group consisting of La, Pr, Nd, and Sm, and 0.04 ≤ x ≤ 0.14, LiₓPO_{y}N_{z} for which 2.6 ≤ x ≤ 3.5, 1.9 ≤ y ≤ 3.8, and 0.1 ≤ z ≤ 1.3, Li₃₋ₓPO₄₋ₓNₓ for which 0.05 ≤ x ≤ 0.5, Li₃BO₃, and Li₄SiO₄. Since these solid electrolytes are excellent in water resistance, they can be stably used even in an electrolyte based on an aqueous solution.

The solid electrolyte phase may be particles including the solid electrolyte. Taking the average secondary particle size of the secondary particles as the solid electrolyte phase to be D_{SE}, and the average secondary particle size of the titanium-containing metal oxide particles to be D_{Ti}, these particle sizes desirably satisfy a relation of 1/1000 ≤ D_{SE}/D_{Ti} ≤ 1/10. When D_{SE}/D_{Ti} is less than 1/1000, due to the solid electrolyte particles being small, cohesion of the solid electrolyte particles progresses, and as a result, it becomes difficult to arrange the solid electrolyte particles on the surface of the titanium-containing metal oxide particles. On the other hand, when D_{SE}/D_{Ti} exceeds 1/10, a difference between the secondary particle size of the solid electrolyte particles and the secondary particle size of the titanium-containing metal oxide particles is small. Due to these particle sizes being about the same, it becomes difficult to uniformly and thinly distribute the solid electrolyte particles on the surface of the titanium-containing metal oxide particles.

In the negative electrode active material, the titanium-containing oxide phase, the anatase type TiO₂ phase, and the solid electrolyte phase are desirably present in the following proportions. When, in an X-ray diffraction (XRD) spectrum (hereinafter referred to as XRD spectrum) obtained by subjecting the negative electrode active material to X-ray diffraction measurement, the peak intensity of the highest peak attributable to the titanium-containing oxide phase which is the parent phase is taken to be I, the peak intensity of the highest peak attributable to the solid electrolyte phase is taken to be I_{SE}, and the peak intensity of the highest peak of the anatase type TiO₂phase is taken to be I_{TiO2}, quantitative discussion may be made by discussing the ratio of these peak intensities. With respect to the peak intensity ratio, it is preferable that 0.05 ≤ I_{SE}/I ≤ 0.3 and 0.05 ≤ I_{TiO2}/I ≤ 0.3. For both I_{SE}/I and I_{TiO2}/I, a peak intensity ratio that is less than 0.05 means that the existing amount of the solid electrolyte phase or the anatase type TiO₂ phase is small, and the distribution at the surface of the titanium-containing metal oxide particles is not uniform and sufficient, or that the crystallinity of these phases is low. In this case, there is concern that self-discharge cannot be sufficiently suppressed. Meanwhile, I_{SE}/I exceeding 0.3 means that the existing amount of the solid electrolyte phase is excessive, and I_{TiO2}/I exceeding 0.3 means that the existing amount of the anatase type TiO₂ phase is excessive. In either case, there is concern that insertion of lithium ions into the bulk titanium-containing oxide phase which is the parent phase and extraction of lithium ions therefrom are inhibited. Details of the X-ray diffraction measurement will be described later.

The negative electrode active material is contained in the negative electrode, for example, in the form of particles. Specifically, the negative electrode active material may be, for example, a composite particle, in which the titanium-containing oxide phase, the anatase type TiO₂ phase, and the solid electrolyte phase form a composite. The negative electrode active material particles may be expressed as secondary particles containing titanium-containing metal oxide particles and solid electrolyte particles. This secondary particle may be an agglomerate between solid electrolyte phases and titanium-containing oxide particles, in which the titanium-containing oxide particles have anatase type TiO₂ phases arranged on their surfaces. As another form of secondary particles, there may be adopted a form in which the solid electrolyte phase and the anatase type TiO₂ phase are arranged on the outermost surface of an agglomerate of titanium-containing oxide particles. Plural of such secondary particles may further become agglomerated to form agglomerate particles. The shape of particles is not particularly limited and may be, for example, a spherical shape, an elliptical shape, a flat shape, or a fibrous shape. The average particle size of the negative electrode active material particles (secondary particles including the titanium-containing metal oxide particles and the solid electrolyte particles, or agglomerate particles of such secondary particles) is preferably 500 nm or more and 50 µm or less. When the average particle size of the negative electrode active material is less than 500 nm, there is concern that coatability deteriorates due to influences such as aggregation or the like, and thus may result in lowering of productivity of manufacturing the negative electrode. On the other hand, when the average particle size is more than 50 µm, a Li diffusion distance inside the active material becomes long, so it is difficult to obtain sufficient reactivity.

In the negative electrode active material of the approach, it is considered that the lithium ion insertion reaction may proceed as follows.

When lithium ions are inserted into the negative electrode active material, first, lithium ions are inserted into the anatase type TiO₂ phase located at the surface of the titanium-containing metal oxide particles. At this time, lithium ions may pass through the solid electrolyte phase. Since the anatase type TiO₂ phase or the solid electrolyte phase is located at a surface layer of the negative electrode active material, that is, at an interface with the electrolyte, the potential of lithium ion insertion is relatively high. Thus, a reaction for generating hydrogen is unlikely to occur, and self-discharge hardly progresses. Subsequently, due to a potential difference between the titanium-containing oxide phase forming the bulk of the titanium-containing oxide particles and the anatase type TiO₂ phase, lithium ions inserted into the anatase type TiO₂ phase are move by diffusion into the titanium-containing oxide phase.

In this way, when the potential at the contact interface between the active material and water is lowered while the low potential of the titanium-containing oxide phase as the parent phase is made use of for the lithium ion insertion reaction, self-discharge can be suppressed while achieving a high battery voltage.

The anatase type TiO₂ has a relatively high electrical resistance. For example, in a battery using a nonaqueous electrolyte containing a nonaqueous solvent, when the electrode material is coated with anatase type TiO₂, the electrode performance may be greatly impaired. On the other hand, in the secondary battery according to the approach, since the electrolyte contains water, the ionic conductivity in the electrolyte is high. This makes it possible to favorably use a negative electrode active material containing an anatase type TiO₂ phase, since there is little influence of resistance increase by anatase type TiO₂.

In addition, since the operating potential of the titanium-containing oxide is relatively high in nonaqueous electrolytes, even if the anatase type TiO₂ phase or the solid electrolyte phase is provided at the surface layer, it is difficult to obtain the effect of increasing the potential. Thus, in a battery using the nonaqueous electrolyte, the effect of suppressing side reactions between the electrode material and the nonaqueous electrolyte is small. On the other hand, the operating potential of the titanium-containing oxide in the electrolyte containing water is outside the potential window of the electrolyte. Thus, by providing the anatase type TiO₂ phase or the solid electrolyte phase on the surface, the potential at an interface between the negative electrode active material and the electrolyte is brought close to the range of the potential window of the electrolyte, so that the effect of suppressing side reactions and self-discharge appears greatly.

### <Method of Producing Negative Electrode Active Material>

Titanium-containing metal oxide particles including a titanium-containing oxide phase and an anatase type TiO₂ phase and a negative electrode active material in which at least a portion of the anatase type TiO₂ phase is located at the surface of the titanium-containing metal oxide particles, and a solid electrolyte phase is disposed on at least a portion of the surface of the titanium-containing metal oxide particles may be produced, for example, by the following method.

First, titanium-containing oxide particles having a composition of a target titanium-containing oxide phase are prepared. The titanium-containing oxide particles may be, for example, particles of the above described titanium-containing oxide.

A solid electrolyte is attached to the surface of the titanium-containing oxide particles. As a method of attaching the solid electrolyte, for example, a solid phase method, a liquid phase method, a powder sputtering method, or the like may be used. Among these methods, the solid phase method is preferable because the process is easier than other methods. An example using the solid phase method will be specifically described below.

For example, a solid electrolyte powder is provided. If necessary, the particle size (for example, secondary particle size) of solid electrolyte particles in the solid electrolyte powder is adjusted.

When a solid electrolyte powder having a low crystallinity and having a glass structure is used, the effect of fusing described later is easily obtained, and therefore, it is preferable to lower the crystallinity of the solid electrolyte powder to make it into a vitreous state. For example, by grinding crystallized solid electrolyte particles with a ball mill, it is possible to easily and effectively lower the crystallinity.

The solid electrolyte powder is weighed out at a weight ratio of 1% or more and 20% or less with respect to the titanium-containing oxide particles. By mixing the solid electrolyte powder and the titanium-containing oxide particles with a planetary ball mill, the solid electrolyte powder can be physically or physicochemically attached to the surface of the titanium-containing oxide particles. If the mixed powder thus obtained is further fired at a relatively low temperature of 200°C or more and 700°C or less, the solid electrolyte phase can be fused onto the surface of the titanium-containing oxide particles while preventing excessive volatilization of lithium from the solid electrolyte and the titanium-containing oxide containing lithium.

In addition, at the time of firing, due to the influence of lithium volatilization and lithium diffusion from the bulk titanium-containing oxide to the added solid electrolyte, the surface of the titanium-containing oxide particles is modified to form the anatase type TiO₂ phase. Thus, the anatase type TiO₂ phase is densely formed on the surface of the titanium-containing oxide particles. By lowering the firing temperature as described above, crystal growth of the anatase type TiO₂ phase formed on the surface of the titanium-containing oxide particles can be suppressed, and the coating thickness can be reduced.

The firing temperature is more preferably 300°C or more and 700°C or less. When the firing temperature is 300°C or more, the formation of the anatase type TiO₂ phase on the surface of the titanium-containing oxide particles proceeds more reliably. When the firing temperature exceeds 700°C, there is concern that volatilization of lithium proceeds excessively, and anatase type TiO₂ phase and rutile type TiO₂ phase are excessively formed. If the anatase type TiO₂ is excessive, charge and discharge of parent phase titanium-containing oxide may be inhibited. Excessive rutile type TiO₂ does not exhibit reversible extraction and insertion of lithium ions, unlike anatase type TiO₂. If the rutile type TiO₂ phase is excessively present on the surface of the titanium-containing oxide particles, charge and discharge are hindered, so that it is desirable to reduce the amount of rutile type TiO₂ formed on the surface as much as possible.

The firing temperature is still more preferably 400°C or more and 600°C or less. When the firing temperature is 400°C or more, the anatase type TiO₂ phase can be sufficiently formed on the surface of the titanium-containing oxide particles. On the other hand, when the firing temperature is 600°C or less, it is possible to suppress inhibition of extraction and insertion of lithium ions due to excessive formation of the rutile type TiO₂ phase.

The firing time is preferably 6 hours or more and 12 hours or less. Within this time range, the formation amount of the anatase type TiO₂ phase becomes sufficient and does not become excessive, either. When the firing time is less than 6 hours, fusing of the solid electrolyte onto the surface of the titanium-containing oxide particles may be insufficient.

As a result of the surface modification of the titanium-containing oxide particles, a sandwich structure is obtained in which the anatase type TiO₂ phase is formed at an interface between the bulk of the titanium-containing oxide phase which is a parent phase and the solid electrolyte phase. With the negative electrode active material particles having such a structure, it is possible to suppress the reductive decomposition of water while maintaining the lithium diffusibility in the vicinity of the surface.

Described hereinafter are the details of the above described firing temperature. Taking a glass transition point of the solid electrolyte as Tg (°C) and a crystallization temperature as Tc (°C), the firing temperature T (°C) preferably satisfies Tg ≤ T ≤ Tc + 100°C. If the firing temperature T is less than Tg, fusing of the solid electrolyte onto the titanium-containing oxide particles becomes insufficient, and there is a possibility that lithium diffusion at an interface between the titanium-containing oxide particles and the solid electrolyte is inhibited, or that the effect of coating with the solid electrolyte cannot be sufficiently obtained. On the other hand, when the firing temperature T is higher than Tc + 100°C, there is concern that volatilization of lithium from the solid electrolyte and the titanium-containing oxide becomes significant.

### <Evaluation Method of Negative Electrode Active Material>

There will be described below a method of evaluating various physical properties of the negative electrode active material such as the composition and distribution of each phase included in the negative electrode active material and the average particle size.

In the case where the active material to be measured is contained in the electrode material of a secondary battery, pretreatment is performed as follows. First, the battery is discharged at a rate of 0.2 C to a lower limit voltage. The discharged battery is disassembled to take out the negative electrode. Since an electrolyte based on an aqueous solution is used for the battery, the battery may be disassembled in air. The taken-out negative electrode is immersed in pure water for 20 minutes and then vacuum dried at -60 MPa for 30 minutes. The negative electrode taken out by the above pretreatment is further processed as necessary, and a measurement sample in a form suitable for each measurement is prepared.

### <Method of Examining Solid Electrolyte Phase and Anatase Type TiO₂ Phase>

Whether or not there is an anatase type TiO₂ phase located at the surface of the titanium-containing metal oxide particles can be examined by observation using, for example, a transmitting electron microscope (TEM). In addition, the average particle size of the titanium-containing metal oxide particles and the thickness of the anatase type TiO₂ phase can be examined by TEM observation. As the TEM, for example, H-9000 UHR III manufactured by Hitachi, Ltd. may be used.

A measurement sample for TEM observation is prepared as follows. First, surface polishing is performed by subjecting the negative electrode taken out in the pretreatment to ion milling. Thereafter, a protective film of tungsten is formed in an observation region to be measured. Thereafter, the observation region is made thin by focused ion beam (FIB) processing to make it a region through which an electron beam can pass through. The negative electrode after FIB processing is used as a measurement sample.

In cases such as when observation in the state of an electrode is difficult, a sample is prepared using the negative electrode active material extracted from the negative electrode as follows. First, a layer containing the negative electrode active material (for example, a negative electrode mixed-materials layer described later) is cut out, and the aggregation is resolved by using a mortar or the like to obtain a powder containing the negative electrode active material. A thin film sample is prepared using the obtained powder and a supporting film, a mesh, a micro grid or the like to be subjected to surface polishing and FIB processing as described above, and thus to prepare a measurement sample.

For the prepared measurement sample, the accelerating voltage is set at 300 kV, and the measurement sample is observed at a magnification of from half a million to 2 million times. From the obtained diffraction pattern, the crystal structure of the bulk of the negative electrode active material particles and near the surface of the particles can be analyzed. The analysis result of the bulk portion may include the crystal structure of the titanium-containing oxide particle as the parent phase of the titanium-containing metal oxide particle. The analysis result near the surface may include the crystal structures of the anatase type TiO₂ phase and the solid electrolyte phase. As described above, by examining the analysis result of the crystal structure in the negative electrode active material from the diffraction pattern, the presence or absence of the titanium-containing oxide phase, the anatase type TiO₂ phase, and the solid electrolyte phase can be confirmed.

The particle size of the titanium-containing metal oxide particles, the particle size of the solid electrolyte particles as the solid electrolyte phase, and the thickness of the anatase type TiO₂ phase can be examined from a TEM observation image.

### <Qualitative and Quantitative Analysis of Solid Electrolyte Phase and Anatase Type TiO₂ Phase by XRD Analysis>

Qualitative analysis of the solid electrolyte phase can be performed by carrying out XRD analysis on the negative electrode active material. For example, using an XRD measuring device such as a desktop type X-ray diffractometer D2 PHASER manufactured by Bruker Corporation, measurement is performed on an active material sample as a measurement target.

The active material sample as a measurement target is, for example, the negative electrode active material powder after manufacturing and before being incorporated into a negative electrode as an active material for a battery. Alternatively, a negative electrode active material sample extracted from the negative electrode taken out from the battery in the pretreatment is used as a measurement target. As the extracted negative electrode active material sample, for example, a powder containing a negative electrode active material obtained by resolving the aggregation of the negative electrode mixed-materials layer cut out from the negative electrode is used.

As the measurement conditions, a diffraction angle 2θ is set from 10 degrees to 80 degrees with respect to a CuKα ray source, a step width is set to 0.02 degrees, and an integration time is set at 0.5 seconds. By identifying the solid electrolyte phase at the surface from the obtained diffraction peak, the presence or absence of the solid electrolyte phase can be confirmed.

As described above, each phase of the negative electrode active material can be quantitatively analyzed based on the strongest peak intensity I of the titanium-containing oxide phase in the XRD measurement spectrum, the strongest peak intensity I_{SE} of the solid electrolyte phase, and the strongest peak intensity I_{TiO2} of the anatase type TiO₂ phase.

The secondary battery according to the approach includes the positive electrode, the negative electrode, and the electrolyte, and for example, a separator may be interposed between the positive electrode and the negative electrode. The secondary battery may also include gaskets, electrode terminals, and electrode leads. The secondary battery may further include a container member in which these battery members are housed.

The secondary battery may be, for example, a lithium ion secondary battery.

Each component of the secondary battery according to the approach is explained below.

### 1) Negative Electrode

The negative electrode includes a negative electrode current collector and a negative electrode mixed-materials layer disposed on the negative electrode current collector and containing a negative electrode active material. Details of the negative electrode active material contained in the negative electrode mixed-materials layer are as described above.

The negative electrode current collector contains at least one metal selected from the group consisting of aluminum, copper, zinc, nickel, titanium, and stainless steel. The negative electrode current collector may contain one metal or two or more metals among them. The negative electrode current collector may be, for example, a metal foil formed of the metal. Alternatively, negative electrode current collector may be, for example, a foil formed of an alloy containing the metal(s). The negative electrode current collector may be, for example, in the shape of a mesh or a porous material, in addition to the foil. The foil shape, having a small volume and a large surface area, is desirable for improving the energy density and the output.

A coat such as a carbon-containing coat, a polymer coat, or an oxide coat may be formed on the negative electrode current collector. When the negative electrode current collector has such a coat, electrolysis of water that may occur at a contact interface between the negative electrode current collector and the electrolyte can be suppressed. Thus, the effect of further suppressing hydrogen generation in the secondary battery is expected.

The negative electrode mixed-materials layer may be disposed on one surface or both of reverse surfaces of the negative electrode current collector. The negative electrode mixed-materials layer may further include an electro-conductive agent and a binder, in addition to the negative electrode active material.

Examples of the electro-conductive agent include carbonaceous substances such as acetylene black, carbon black, graphite, carbon nanofiber, and carbon nanotube. The carbonaceous substances may be used alone or as a mixture of plural carbonaceous substances.

The binder binds the active material, the electro-conductive agent, and the current collector. Examples of the binder include polytetrafluoroethylene (PTFE), polyvinylidene fluoride (PVdF), fluororubber, acrylic resin, and celluloses such as carboxymethyl cellulose.

With respect to the mixing ratio of the negative electrode active material, the electro-conductive agent, and the binder in the negative electrode mixed-materials layer, it is preferable that the proportion of the negative electrode active material is within a range of 30% by weight to 96% by weight, the proportion of the negative electrode electro-conductive agent is within a range of 2% by weight to 60% by weight, and the proportion of the binder is within a range of 2% by weight to 30% by weight. When the proportion of the electro-conductive agent is less than 2% by weight, the current collecting performance of the negative electrode mixed-materials layer is reduced, and consequently, the high current performance of the battery may be reduced. When the proportion of the binder is less than 2% by weight, the binding between the negative electrode mixed-materials layer and the negative electrode current collector is reduced, and consequently, the cycle performance may be reduced. On the other hand, from the perspective of obtaining a high capacity, the electro-conductive agent and the binder are preferably included in proportions of 60% by weight or less and 30% by weight or less, respectively.

The negative electrode may be produced by the following method, for example. First, a negative electrode active material, an electro-conductive agent, and a binder are suspended in a solvent to prepare a slurry. The slurry is applied onto one surface or both of reverse surfaces of a negative electrode current collector. Next, the applied slurry is dried to form a layered stack of the negative electrode mixed-materials layer and the negative electrode current collector. Then, the layered stack is subjected to pressing. The negative electrode can be produced in this manner.

Alternatively, the negative electrode may also be produced by the following method. First, a negative electrode active material, an electro-conductive agent, and a binder are mixed to obtain a mixture. Next, the mixture is formed into pellets. Then the negative electrode can be obtained by arranging the pellets on the negative electrode current collector.

### 2) Positive Electrode

The positive electrode may include a positive electrode current collector and a positive electrode mixed-materials layer. The positive electrode mixed-materials layer may be formed on one surface or both of reverse surfaces of the positive electrode current collector. The positive electrode mixed-materials layer may include a positive electrode active material, and optionally an electro-conductive agent and a binder.

The positive electrode current collector may contain at least one metal selected from the group consisting of aluminum, copper, zinc, nickel, titanium, and stainless steel. The positive electrode current collector may contain one metal or two or more metals among them. The positive electrode current collector may be, for example, a metal foil formed of the metal. Alternatively, positive electrode current collector may be, for example, a foil formed of an alloy containing the metal(s). The positive electrode current collector may be, for example, in the shape of a mesh or a porous material, in addition to the foil. The foil shape, having a small volume and a large surface area, is desirable for improving the energy density and the output.

A coat such as a carbon-containing coat, a polymer coat, or an oxide coat may be formed on the positive electrode current collector. When the positive electrode current collector has such a coat, corrosion of the positive electrode current collector by a water-based solvent in the electrolyte can be suppressed, and thus it is preferable.

As the positive electrode active material, for example, compounds capable of having lithium ions inserted and extracted may be used. The positive electrode active material may include, for example, a lithium-manganese composite oxide, a lithium-nickel composite oxide, a lithium-cobalt composite oxide, a lithium-cobalt-aluminum composite oxide, a lithium-nickel-cobalt-manganese composite oxide, a spinel-type lithium-manganese-nickel composite oxide, a lithium-manganese-cobalt composite oxide, a lithium iron oxide, a lithium fluorinated iron sulfate, a phosphate compound having an olivine crystal structure (for example, LiₓFePO₄ for which 0 ≤ x ≤ 1, or LiₓMnPO₄ for which 0 ≤ x ≤ 1), an oxide of transition metal represented by LiₓMO₂ for which 0 ≤ x ≤ 1 and M is at least one selected from the group consisting of Mn, CO, and Ni, and the like. The phosphate compound having the olivine crystal structure has excellent thermal stability.

Examples of the positive electrode active material with which a high positive electrode potential can be obtained are described below. Examples include lithium-manganese composite oxides such as LiMn₂O₄ (0 < x ≤ 1), or LiₓMnO₂ (0 < x ≤ 1); a lithium-nickel-aluminum composite oxide such as LiₓNi_{1-y}Al_{y}O₂ (0 < x ≤ 1 and 0 < y < 1); lithium-cobalt-composite oxides such as LiₓCoO₂ (0 < x ≤ 1); lithium-nickel-cobalt-manganese composite oxides such as LiₓNi_{1-y-z}Co_{y}Mn_{z}O₂ (0 < x ≤ 1, 0 < y ≤ 1, 0 < z < 1, and y + z < 1); lithium-manganese-cobalt composite oxides such as LiₓMn_{y}Co_{1-y}O₂ (0 < x ≤ 1 and 0 < y < 1); spinel-type lithium-manganese-nickel composite oxides such as LiₓMn_{2-y}Ni_{y}O₄ (0 < x ≤ 1 and 0 < y < 2) ; lithium phosphate oxides having an olivine structure such as LiₓFePO₄ (0 ≤ x ≤ 1), LiFe_{1-y}Mn_{y}PO₄ (0 < x ≤ 1 and 0 ≤ y ≤ 1), or LiₓCoPO₄ (0 < x ≤ 1); fluorinated iron sulfates (such as LiₓFeSO₄F for which 0 < x ≤ 1).

One kind of the positive electrode active materials may be used alone, or two or more kinds may be used. The positive electrode active material preferably includes at least one compound selected from the group consisting of LiFePO₄, LiMn₂O₄, and LiCoO₂, among the compounds described above. When these materials are used, the oxidative decomposition of water can be suppressed because the operating potential does not become too high.

The electro-conductive agent, which may be included in the positive electrode mixed-materials layer, includes the same electro-conductive agent as those that may be included in the negative electrode mixed-materials layer. Examples of the electro-conductive agent, accordingly, include carbonaceous substances such as acetylene black, carbon black, graphite, carbon nanofiber and carbon nanotube. The carbonaceous substances may be used alone or as a mixture of plural carbonaceous substances.

The binder binds the active material, the electro-conductive agent, and the current collector in the positive electrode mixed-materials layer, in a similar manner as with the negative electrode mixed-materials layer. The binder, which may be included in the positive electrode mixed-materials layer, includes the same binder as those that may be included in the negative electrode mixed-materials layer. Examples of the binder, accordingly, include polytetrafluoroethylene (PTFE), polyvinylidene fluoride (PVdF), fluororubber, acrylic resin, celluloses such as carboxymethyl cellulose, and the like.

With respect to the mixing ratio of the positive electrode active material, the electro-conductive agent, and the binder in the positive electrode mixed-materials layer, it is preferable that the proportion of the positive electrode active material is within a range of 30% by weight to 95% by weight, the proportion of the electro-conductive agent is within a range of 3% by weight to 60% by weight, and the proportion of the binder is within a range of 2% by weight to 30% by weight. When the mixing ratio of the electro-conductive agent is 3% by weight or more, the electric conductivity of the positive electrode can be secured. When the mixing ratio of the electro-conductive agent is 18% by weight or less, the decomposition of the electrolyte on the surface of the electro-conductive agent during storage at a high temperature can be reduced. When the mixing ratio of the binder is 2% by weight or more, sufficient electrode strength can be obtained. When the mixing ratio of the binder is 30% by weight or less, the mixed amount of the binder, which is an insulating material, within the positive electrode is decreased, thus the internal resistance can be decreased.

The positive electrode may be produced by the following method, for example. First, a positive electrode active material, an electro-conductive agent, and a binder are suspended in a solvent to prepare a slurry. The slurry is applied onto one surface or both of reverse surfaces of a positive electrode current collector. Next, the applied slurry is dried to form a layered stack of the positive electrode mixed-materials layer and the positive electrode current collector. Then, the layered stack is subjected to pressing. The positive electrode can be produced in this manner.

Alternatively, the positive electrode may also be produced by the following method. First, a positive electrode active material, an electro-conductive agent, and a binder are mixed to obtain a mixture. Next, the mixture is formed into pellets. Then the positive electrode can be obtained by arranging the pellets on the positive electrode current collector.

### 3) Electrolyte

The electrolyte includes water and electrolyte salt(s). The electrolyte may include at least one anion selected from the group consisting of NO₃⁻, Cl⁻, LiSO₄⁻, SO₄²⁻, and OH⁻. The electrolyte may include one of the anions, or alternatively, include two or more of the anions.

The water included in the electrolyte may be, for example, pure water. Alternatively, the water may be included as a mixed solution or mixed solvent (e.g., an aqueous solution) with a substance other than water.

In the above described electrolyte, the amount of water solvent (amount of pure water, or alternatively, amount of water within a solution or solvent containing water) is preferably 1 mol or more, based on 1 mol of electrolyte salt as solute. The amount of water solvent is more preferably 3.5 mol or more, based on 1 mol of electrolyte salt.

As the electrolyte salt, there may be used a substance that becomes dissociated and thus generates the anion described above when the substance is dissolved in water, in a solution containing water, or in a solvent containing water. In particular, preferable are lithium salts that dissociate into Li ion(s) and the anion described above. Such lithium salts include, for example, lithium nitrate (LiNO₃), lithium chloride (LiCl), lithium sulfate (Li₂SO₄), lithium hydroxide (LiOH), and the like.

The lithium salt that dissociates into Li ion(s) and the above anion has a relatively high solubility in water, in water-containing solutions, and in water-containing solvents. For that reason, there can be obtained an electrolyte, in which the anion concentration is of a high concentration of 1 M to 10 M, and thus having favorable Li ion diffusibility.

The electrolyte containing NO₃⁻ and/or Cl⁻ may be used in a wide anion concentration range of about 0.1 M to 10 M. From the perspective of ion conductivity, the anion concentration is preferably of a high concentration of 3 M to 9 M. It is more preferable that the anion concentration of the electrolyte containing NO₃⁻ or Cl⁻ is from 8 M to 9 M.

The electrolyte containing LiSO₄⁻ and/or SO₄²⁻ may be used in an anion concentration range of about 0.05 M to 2.5 M. From the perspective of ion conductivity, the anion concentration is preferably of a high concentration of 1.5 M to 2.5 M.

The OH⁻ concentration in the electrolyte is desirably from 10⁻¹⁰ M to 0.1 M.

The electrolyte may contain both lithium ions and sodium ions.

It is preferable that the electrolyte has a pH of 4 to 13. When the pH is less than 4, since the electrolyte would be acidic, decomposition of the active material is apt to progress. When the pH is more than 13, since there is decrease in an overvoltage for oxygen generation at the positive electrode, the electrolysis of water is apt to progress.

The solute in the electrolyte, i.e., the electrolyte salt can be qualitatively and quantitatively determined, for example, by ion chromatography. Ion chromatography is particularly preferable as the analysis method because of high sensitivity.

Examples of specific measurement conditions for the qualitative and quantitative analysis of the solute included in the electrolyte according to the ion chromatography are shown below:
System: Prominence HIC-SP
Analysis Column: Shim-pack IC-SA3
Guard Column: Shim-pack IC-SA3 (G)
Eluent: 3.6 mmol/L, aqueous sodium carbonate solution
Flow Rate: 0.8 mL/minute
Column Temperature: 45°C
Injection Amount: 50 µL
Detection: electric conductivity

Whether or not water is included in the electrolyte can be examined by GC-MS (gas chromatography - mass spectrometry) measurement. Water content in the electrolyte can be calculated, for example, from ICP (inductively coupled plasma) emission spectrometry, or the like. In addition, the mole numbers of the solvent can be calculated from the measurement of specific weight of the electrolyte.

### 4) Electrode Terminal

The electrode terminal may include, for example, an external terminal and an internal terminal. The external terminal is, for example, an electrode lead. Alternatively, a conductive container member such as a metal can may be used as the external terminal, as described below. The internal terminal includes, for example, an electrode tab. The shape of the internal terminal is not particularly limited, and may include, for example, a strip shape, a disk shape, a washer shape, a spiral shape, a corrugated plate shape, and the like.

The electrode terminal is preferably formed from at least one metal selected from the group consisting of aluminum, zinc, titanium, and iron, or from an alloy thereof. Examples of the alloy include aluminum alloy or stainless steel. As the material for the internal terminal, a metal capable of suppressing the electrolysis of water is desirable. For example, the positive electrode internal terminal is preferably made of titanium, and the negative electrode internal terminal is preferably made of zinc.

The internal terminal may get into contact with the electrolyte inside the battery. Therefore, the surface of the internal terminal is desirably protected with an insulating resin. In this manner, the electrolysis of water can be suppressed, thus desirable. As the insulating resin, for example, a polymer material such as polypropylene (PP), polyethylene (PE), nylon, and polyethylene terephthalate (PET) may be used.

The electrode terminal is used for electrically connecting, for example, an external circuit to the battery interior through the electrode terminal. By connecting the external circuit to the electrode terminal, supplying of electric current to the external circuit becomes possible. Alternatively, in the case where plural batteries are electrically connected in series or in parallel, the electrode terminals are electrically connected among the plural batteries.

### 5) Separator

As the separator, there may be used, for example, a porous film or a synthetic resin non-woven fabric, either of which is formed from a material such as polyethylene (PE), polypropylene (PP), cellulose, glass fiber, or polyvinylidene fluoride (PVdF). Of these, cellulose is preferable because of its excellent ability to hold liquids and Li diffusibility.

A solid electrolyte may also be used as the separator. As the separator, preferable are oxides such as LATP (Li₁₊ₓAlₓTi₂₋ₓ (PO₄)₃ for which 0.1 ≤ x ≤ 0.4) having a NASICON type framework, an amorphous LIPON (LiₓPO_{y}N_{z} for which 2.6 ≤ x ≤ 3.5, 1.9 ≤ y ≤ 3.8, 0.1 ≤ z ≤ 1.3), and the like.

### 6) Gasket

As the gasket, for example, a polymer material such as polypropylene (PP), polyethylene (PE), nylon or polyethylene terephthalate (PET) may be used. By using the polymer material as the gasket, not only can the air-tightness of the battery interior be improved, but also, short-circuiting between the positive electrode and the negative electrode can be prevented.

### 7) Container Member

As the container member, a bag-shaped container made of a laminate film or a metal container may be used. The shape of the container member may include, for example, a flat-type, a square-type, a cylindrical-type, a coin-type, a button-type, a sheet-type, a stack-type, and the like. Of course, any appropriate container member may be used depending on the use of the secondary battery. For example, when the secondary battery is installed in portable electronic devices and the like, a container member for a small-sized battery may be used. When the secondary battery is installed on vehicles such as two-wheel to four-wheel automobiles or railway cars, a container member for a large scale battery may be used.

As the laminate film, for example, a multilayer film that includes resin layers and a metal layer disposed between the resin layers may be used. The metal layer is preferably an aluminum foil or aluminum alloy foil in order to reduce weight. As the resin layer, for example, a polymer material such as polypropylene (PP), polyethylene (PE), nylon, or polyethylene terephthalate (PET) may be used. The laminate film may be sealed and formed into a shape of the container member. The laminate film preferably has a thickness of 0.5 mm or less, more preferably 0.2 mm or less.

The metal container is preferably formed from, for example, at least one metal selected from the group consisting of aluminum, zinc, titanium, and iron, or an alloy of the metal(s). Specific examples of the alloy include aluminum alloy and stainless steel. The metal container preferably has a wall thickness of 0.5 mm or less, more preferably 0.2 mm or less.

When the metal container is used as the container member, the metal container can also be used as the electrode terminal (the external terminal).

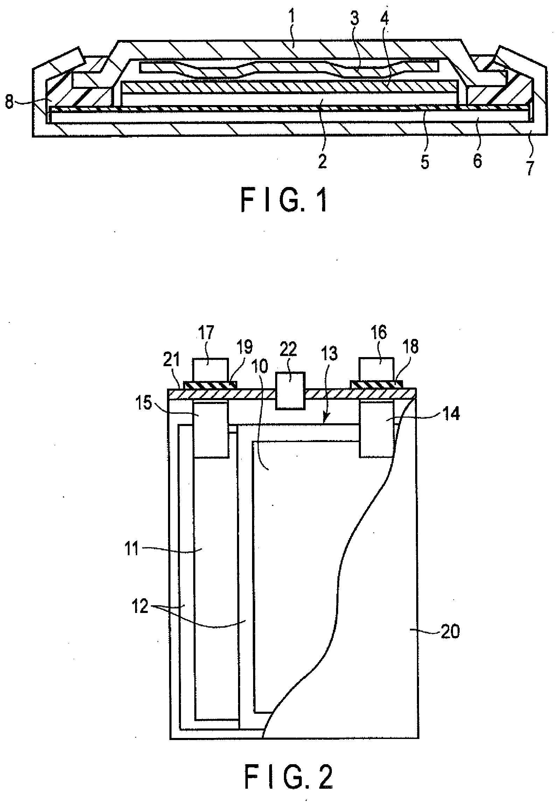

Examples of the secondary battery according to the approach are explained below, with reference to FIG. 1 to FIG. 3.

FIG. 1 shows one example of a secondary battery using a coin-type metal container.

As shown in FIG. 1, a coin-type secondary battery has a structure in which a negative electrode 6, a separator 5, a gasket 8, a positive electrode 2, a spacer 4, a washer 3, and a positive electrode can 1 are sequentially stacked upon a negative electrode can 7. In the negative electrode can 7, an electrolyte (not shown) is housed. The electrolyte may be housed within the secondary battery in a state in which the negative electrode 6, the separator 5 and/or the positive electrode 2 are impregnated with the electrolyte. The electrolyte can also be housed within the lithium secondary battery in a state of filling space within the battery.

Here, the negative electrode 6 is, for example, a disk-shaped negative electrode obtained by punching a negative electrode, produced as described above, into a circular shape. The positive electrode 2 is, for example, a disk-shaped positive electrode obtained by punching a positive electrode, produced as described above, into a circular shape.

The spacer 4 and the washer 3 function as a positive electrode internal terminal for securing electrical conductivity between the positive electrode 2 and the positive electrode can 1. When the washer 3 is a waved washer, as shown in the drawing, the contact between the washer 3 and the spacer 4 or between the washer 3 and the positive electrode can 1 can be made more definite, and the electrical conductivity can be better secured. In FIG. 1, the spacer 4 and the washer 3 (the waved washer) are shown as the positive electrode internal terminal of the coin-type secondary battery, but the positive electrode internal terminal may be a single member or plural members in greater number, and the shapes thereof are not limited to that shown in the drawing.

The negative electrode can 7 is a metal can serving as a container member for the coin-type secondary battery, and also functions as the negative electrode terminal (the external terminal). Similarly, the positive electrode can 1 is a metal can serving as a container member, and also functions as the positive electrode terminal (the external terminal). The central section of the positive electrode can 1 is open in order to release gas generated within the battery (not shown).

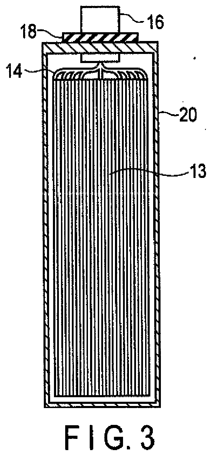

One example of a secondary battery using a square-type metal container is shown in FIG. 2 and FIG. 3.

The electrode group 13 is housed in a rectangular-tube-shaped metal container 20. The electrode group 13 has, for example, a structure where plural positive electrodes 10, negative electrodes 11, and separators 12 are stacked in order of the positive electrode 10, the separator 12, the negative electrode 11 and the separator 12. Alternatively, the electrode group 13 may also have a structure in which the positive electrode 10, the negative electrode 11, and the separator 12 disposed therebetween are spirally wound in a manner such that a flat shape is obtained. Regardless of the structure of the electrode group 13, it is desirable that the separator 12 is disposed as the outermost layer of the electrode group 13 in order to avoid contact between the electrodes and the metal container 20. The electrode group 13 holds the electrolyte (not shown).

As shown in FIG. 3, a strip-shaped positive electrode tab 14 is electrically connected to each of plural positions on the edge of the positive electrode 10 located on the end surface of the electrode group 13. Although not shown, a strip-shaped negative electrode tab 15 is electrically connected to each of plural positions on the edge of the negative electrode 11 located on the end surface. The plural positive electrode tabs 14 are bundled into one, and electrically connected to a positive electrode lead 16. The positive electrode tabs 14 (the positive electrode internal terminals) and the positive electrode lead 16 (the positive electrode external terminal) compose the positive electrode terminal. The negative electrode tabs 15 are bundled into one, and connected to a negative electrode lead 17. The negative electrode tabs 15 (the negative electrode internal terminals) and the negative electrode lead 17 (the negative electrode external terminal) compose the negative electrode terminal.

A metal sealing plate 21 is fixed over an opening of the metal container 20 by welding or the like. The positive electrode lead 16 and the negative electrode lead 17 are respectively drawn out to the outside via outlets provided on the sealing plate 21. A positive electrode gasket 18 and a negative electrode gasket 19 are respectively disposed on the inner circumferential surface of each outlet of the sealing plate 21, in order to avoid short-circuiting due to contact of the sealing plate 21 with the positive electrode lead 16 and the negative electrode lead 17. Furthermore, by providing the positive electrode gasket 18 and the negative electrode gasket 19, the air-tightness of the square-type secondary battery can be maintained.

A control valve 22 (a safety valve) is disposed on the sealing plate 21. When the internal pressure within the battery is increased due to gas generation caused by the electrolysis of water, the generated gas can be released outside through the control valve 22. As the control valve 22, for example, a return type control valve, which operates when an internal pressure becomes higher than a pre-determined value and functions as a sealing plug when the internal pressure is reduced, may be used. Alternatively, a non-return type control valve, which does not recover its function as the sealing plug once it is operated, may also be used. In FIG. 2, the control valve 22 is disposed at the center of the sealing plate 21, but the control valve 22 may be located at the end of the sealing plate 21. The control valve 22 may be omitted.

According to the approach described above, there can be provided a secondary battery that has high safety by virtue of using a water-containing electrolyte, that is high in energy density due to having high battery voltage, and on top of that, has suppressed self-discharge.

### (Second Approach)

According to a second approach, a battery module is provided. The battery module according to the second approach includes plural secondary batteries according to the first approach.

In the battery module according to the second approach, each of the single batteries may be arranged electrically connected in series, in parallel, or in a combination of in-series connection and in-parallel connection.

An example of the battery module according to the second approach will be described next with reference to the drawings.

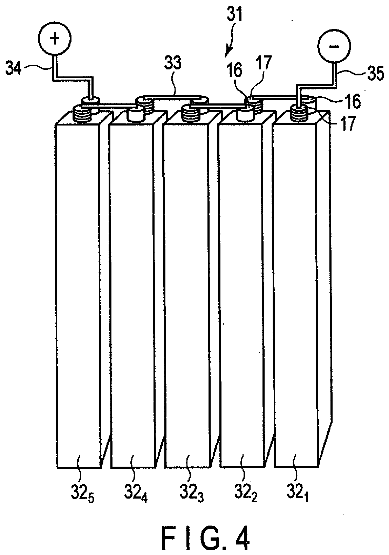

FIG. 4 is a perspective view schematically showing an example of the battery module according to the second approach. A battery module 31 shown in FIG. 4 includes five single-batteries 32₁ to 32₅, four bus bars 33, a positive electrode-side lead 34, and a negative electrode-side lead 35. Each of the five single-batteries 32₁ to 32₅ is a secondary battery according to the first approach.

The bus bar 33 connects, for example, a negative electrode lead 17 of one single-battery 32₂ and a positive electrode lead 16 of the single-battery 32₁ positioned adjacent. In such a manner, five single-batteries 32 are thus connected in series by the four bus bars 33. That is, the battery module 31 shown in FIG. 4 is a battery module of five in-series connection.

As shown in FIG. 4, the positive electrode lead 16 of the single-battery 32₅ located at left end among the five single-batteries 32₁ to 32₅ is connected to the positive electrode-side lead 34 for external connection. In addition, the negative electrode lead 17 of the single-battery 32₁ located at the right end among the five single-batteries 32₁ to 32₅ is connected to the negative electrode-side lead 35 for external connection.

According to the battery module of the second approach, since the battery module includes the secondary battery according to the first approach, it is possible to provide a battery module which has high safety and has a high energy density because of a high battery voltage and in which self-discharge is suppressed.

### (Third Approach)

According to a third approach, a battery pack is provided. The battery pack includes a battery module according to the second approach. The battery pack may include a single secondary battery according to the first approach, in place of the battery module according to the third approach.

The battery pack according to the third approach may further include a protective circuit. The protective circuit has a function to control charging and discharging of the secondary battery. Alternatively, a circuit included in equipment where the battery pack serves as a power source (for example, electronic devices, vehicles, and the like) may be used as the protective circuit for the battery pack.

Moreover, the battery pack according to the third approach may further include an external power distribution terminal. The external power distribution terminal is configured to externally output current from the secondary battery, and to input external current into the secondary battery. In other words, when the battery pack is used as a power source, the current is provided out via the external power distribution terminal. When the battery pack is charged, the charging current (including regenerative energy of motive force of vehicles such as automobiles) is provided to the battery pack via the external power distribution terminal.

Next, an example of a battery pack according to the third approach will be described with reference to the drawings.

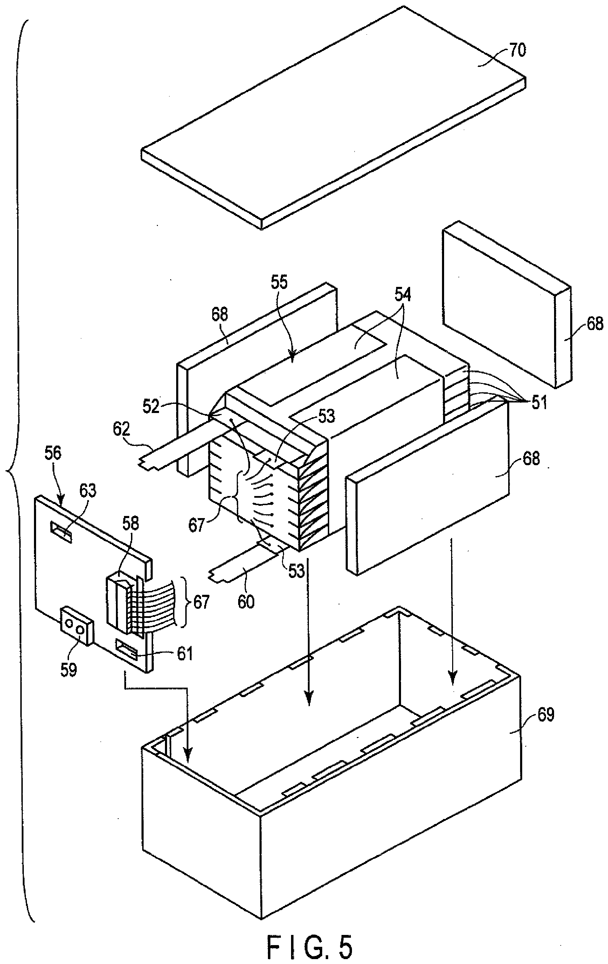

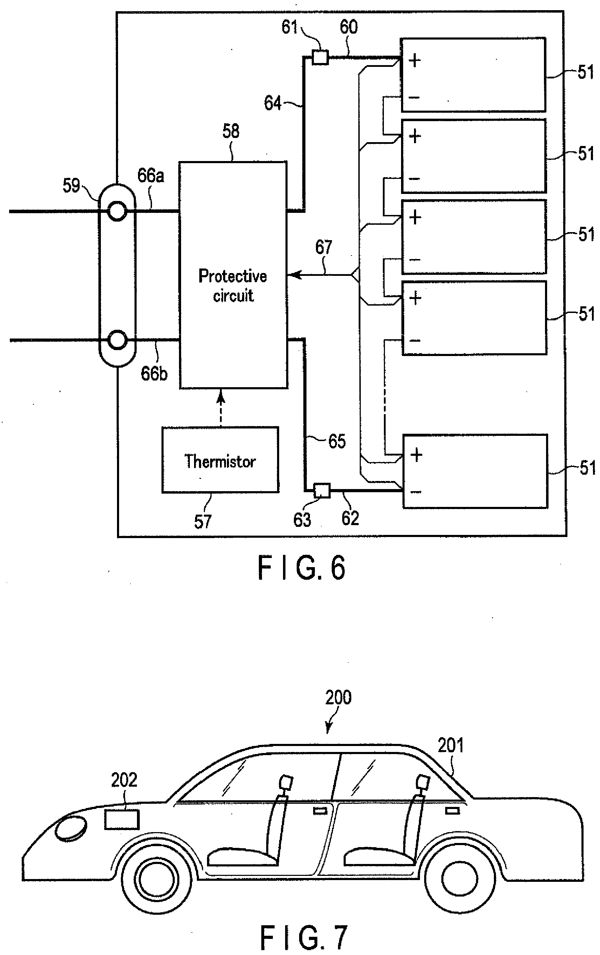

FIG. 5 is an exploded perspective view schematically showing an example of the battery pack according to the third approach. FIG. 6 is a block diagram showing an example of an electric circuit of the battery pack shown in FIG. 5.

A battery pack shown in FIGS. 5 and 6 includes a housing container 69, a lid 70, protective sheets 68, a battery module 55, a printed wiring board 56, wires 67, and an insulating plate (not shown).

The housing container 69 shown in FIG. 5 is a square bottomed container having a rectangular bottom surface. The housing container 69 is configured to be capable of storing the protection sheets 68, the battery module 55, the printed wiring board 56, and the wires 67. The lid 70 has a rectangular shape. The lid 70 covers the housing container 69 to house the battery module 55 and such. The housing container 69 and the lid 70 are provided with openings, connection terminals, or the like (not shown) for connection to an external device or the like.

The battery module 55 includes plural single-batteries 51, a positive electrode-side lead 60, a negative electrode-side lead 62, and adhesive tape(s) 54.

A single-battery 51 has a structure shown in FIGS. 2 and 3. At least one of the plural single-batteries 51 is a secondary battery according to the first approach. The plural single-batteries 51 are stacked such that the negative electrode terminals 52 and the positive electrode terminals 53, which extend outside, are directed toward the same direction. The plural single-batteries 51 are electrically connected in series, as shown in FIG. 6. The plural single-batteries 51 may alternatively be electrically connected in parallel, or connected in a combination of in-series connection and in-parallel connection. If the plural single-batteries 51 are connected in parallel, the battery capacity increases as compared to a case in which they are connected in series.

The adhesive tape(s) 54 fastens the plural single-batteries 51. The plural single-batteries 51 may be fixed using a heat-shrinkable tape in place of the adhesive tape(s) 54. In this case, the protective sheets 68 are arranged on both side surfaces of the battery module 55, and the heat-shrinkable tape is wound around the battery module 55 and protective sheets 68. After that, the heat-shrinkable tape is shrunk by heating to bundle the plural single-batteries 51.

One end of the positive electrode-side lead 60 is connected to the positive electrode terminal 53 of the single-battery 51 located lowermost in the stack of the single-batteries 51. One end of the negative electrode-side lead 62 is connected to the negative electrode terminal 52 of the single-battery 51 located uppermost in the stack of the single-batteries 51.

The printed wiring board 56 is provided along one face in the short-side direction among the inner surfaces of the housing container 69. The printed wiring board 56 includes a positive electrode-side connector 61, a negative electrode-side connector 63, a thermistor 57, a protective circuit 58, wirings 64 and 65, an external power distribution terminal 59, a plus-side (positive-side) wire 66a, and a minus-side (negative-side) wire 66b. One principal surface of the printed wiring board 56 faces the surface of the battery module 55 from which the negative electrode terminals 52 and the positive electrode terminals 53 extend out. An insulating plate (not shown) is disposed in between the printed wiring board 56 and the battery module 55.

The positive electrode-side connector 61 is provided with a through hole. By inserting the other end of the positive electrode-side lead 60 into the though hole, the positive electrode-side connector 61 and the positive electrode-side lead 60 become electrically connected. The negative electrode-side connector 63 is provided with a through hole. By inserting the other end of the negative electrode-side lead 62 into the though hole, the negative electrode-side connector 63 and the negative electrode-side lead 62 become electrically connected.

The thermistor 57 is fixed to one principal surface of the printed wiring board 56. The thermistor 57 detects the temperature of each single-battery 51 and transmits detection signals to the protective circuit 58.

The external power distribution terminal 59 is fixed to the other principal surface of the printed wiring board 56. The external power distribution terminal 59 is electrically connected to device(s) that exists outside the battery pack.

The protective circuit 58 is fixed to the other principal surface of the printed wiring board 56. The protective circuit 58 is connected to the external power distribution terminal 59 via the plus-side wire 66a. The protective circuit 58 is connected to the external power distribution terminal 59 via the minus-side wire 66b. In addition, the protective circuit 58 is electrically connected to the positive electrode-side connector 61 via the wiring 64. The protective circuit 58 is electrically connected to the negative electrode-side connector 63 via the wiring 65. Furthermore, the protective circuit 58 is electrically connected to each of the plural single-batteries 51 via the wires 67.

The protective sheets 68 are arranged on both inner surfaces of the housing container 69 along the long-side direction and on the inner surface along the short-side direction facing the printed wiring board 56 across the battery module 55 positioned therebetween. The protective sheets 68 are made of, for example, resin or rubber.

The protective circuit 58 controls charge and discharge of the plural single-batteries 51. The protective circuit 58 is also configured to cut-off electric connection between the protective circuit 58 and the external power distribution terminal 59 to external device(s), based on detection signals transmitted from the thermistor 57 or detection signals transmitted from each single-battery 51 or the battery module 55.

An example of the detection signal transmitted from the thermistor 57 is a signal indicating that the temperature of the single-battery (single-batteries) 51 is detected to be a predetermined temperature or more. An example of the detection signal transmitted from each single-battery 51 or the battery module 55 include a signal indicating detection of over-charge, over-discharge, and overcurrent of the single-battery (single-batteries) 51. When detecting over-charge or the like for each of the single batteries 51, the battery voltage may be detected, or a positive electrode potential or negative electrode potential may be detected. In the latter case, a lithium electrode to be used as a reference electrode may be inserted into each single battery 51.

Note, that as the protective circuit 58, a circuit included in a device (for example, an electronic device or an automobile) that uses the battery pack as a power source may be used.

As described above, the battery pack includes the external power distribution terminal 59. Hence, the battery pack can output current from the battery module 55 to an external device and input current from an external device to the battery module 55 via the external power distribution terminal 59. In other words, when using the battery pack as a power source, the current from the battery module 55 is supplied to an external device via the external power distribution terminal 59. When charging the battery pack, a charge current from an external device is supplied to the battery pack via the external power distribution terminal 59. If the battery pack is used as an onboard battery, the regenerative energy of the motive force of a vehicle can be used as the charge current from the external device.

Note that the battery pack may include plural battery modules 55. In this case, the plural battery modules 55 may be connected in series, in parallel, or connected in a combination of in-series connection and in-parallel connection. The printed wiring board 56 and the wires 67 may be omitted. In this case, the positive electrode-side lead 60 and the negative electrode-side lead 62 may be used as the external power distribution terminal.

Such a battery pack is used, for example, in applications where excellent cycle performance is demanded when a large current is extracted. More specifically, the battery pack is used as, for example, a power source for electronic devices, a stationary battery, or an onboard battery for various kinds of vehicles. An example of the electronic device is a digital camera. The battery pack is particularly favorably used as an onboard battery.

The battery pack according to the third approach is provided with the secondary battery (batteries) according to the first approach or the battery module according to the second approach. Accordingly, the safety is high, the energy density is high because the battery voltage is high, and, in addition, self-discharge is suppressed.

### (Fourth Approach)

According to a fourth approach, a vehicle is provided. The battery pack according to the third approach is installed on this vehicle.

In the vehicle according to the fourth approach, the battery pack is configured, for example, to recover regenerative energy from power of the vehicle.

Examples of the vehicle according to the fourth approach include two to four-wheeled hybrid electric automobiles, two to four-wheeled electric automobiles, electric assist bicycles, and railway cars.

In the vehicle according to the fourth approach, the installing position of the battery pack is not particularly limited. For example, the battery pack may be installed in the engine compartment of the vehicle, in rear parts of the vehicle, or under seats.

The vehicle according to the fourth approach may have plural battery packs installed. In such a case, the battery packs may be electrically connected in series, electrically connected in parallel, or electrically connected in a combination of in-series connection and in-parallel connection.

An example of the vehicle according to the fourth approach is explained below, with reference to the drawings.

FIG. 7 is a schematic view showing an example of a vehicle according to the fourth approach.

A vehicle 200, shown in FIG. 7 includes a vehicle body 201 and a battery pack 202 according to the third approach.

In the example shown in FIG. 7, the vehicle 200 is a four-wheeled automobile.

The vehicle 200 may be installed with plural battery packs 202. In that case, the battery packs 202 may be connected in series, connected in parallel, or connected in a combination of the connection in series and the connection in parallel.

In FIG. 7, the battery pack 202 is installed in an engine compartment located at the front of the vehicle body 201. As described above, the battery pack 202 may be installed, for example, in rear sections of the vehicle body 201, or under a seat. The battery pack 202 may be used as a power source of the vehicle 200. The battery pack 202 can also recover regenerative energy of power of the vehicle 200.

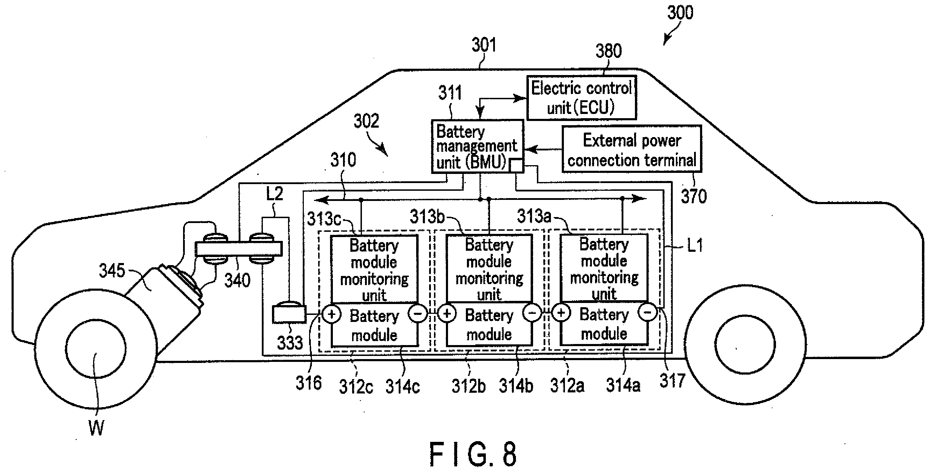

Next, with reference to FIG. 8, the vehicle according to the fourth approach is explained.

FIG. 8 is a view schematically showing one example of the vehicle according to the fourth approach. A vehicle 300, shown in FIG. 8, is an electric automobile.

The vehicle 300, shown in FIG. 8, includes a vehicle body 301, a vehicle power source 302, a vehicle ECU (electric control unit) 380, which is a master controller of the vehicle power source 302, an external terminal (an external power connection terminal) 370, an inverter 340, and a drive motor 345.

The vehicle 300 includes the vehicle power source 302, for example, in an engine compartment, in the rear sections of the automobile body, or under a seat. In FIG. 8, the position of the vehicle power source 302 installed in the vehicle 300 is schematically shown.

The vehicle power source 302 includes plural (for example, three) battery packs 312a, 312b and 312c, BMU (a battery management unit) 311, and a communication bus 310.

The three battery packs 312a, 312b and 312c are electrically connected to each other in series. The battery pack 312a includes a battery module 314a and a battery module monitoring unit 313a (e.g., a VTM : voltage temperature monitoring). The battery pack 312b includes a battery module 314b, and a battery module monitoring unit 313b. The battery pack 312c includes a battery module 314c, and a battery module monitoring unit 313c. The battery packs 312a, 312b and 312c can each be independently removed, and may be exchanged by a different battery pack 312.

Each of the battery modules 314a to 314c includes plural single-batteries connected to each other in series. At least one of the plural single-batteries is the secondary battery according to the first approach. The battery modules 314a to 314c each perform charging and discharging through a positive electrode terminal 316 and a negative electrode terminal 317.

In order to collect information concerning security of the vehicle power source 302, the battery management unit 311 performs communication among the battery module monitoring units 313a to 313c and collects information such as voltages or temperatures of the single-batteries included in the battery modules 314a to 314c included in the vehicle power source 302.

The communication bus 310 is connected between the battery management unit 311 and the battery module monitoring units 313a to 313c. The communication bus 310 is configured so that multiple nodes (i.e., the battery management unit and one or more battery module monitoring units) share a set of communication lines. The communication bus 310 is, for example, a communication bus configured based on CAN (Control Area Network) standard.

The battery module monitoring units 313a to 313c measure a voltage and a temperature of each single-battery in the battery modules 314a to 314c based on communications from the battery management unit 311. It is possible, however, to measure the temperatures only at several points per battery module and the temperatures of all of the single-batteries need not be measured.

The power source for vehicle 302 may also have an electromagnetic contactor (for example, a switch unit 333 shown in FIG. 8) for switching connection between the positive electrode terminal 316 and the negative electrode terminal 317. The switch unit 333 includes a precharge switch (not shown), which is turned on when the battery modules 314a to 314c are charged, and a main switch (not shown), which is turned on when battery output is supplied to a load. The precharge switch and the main switch include a relay circuit (not shown), which is turned on or off based on a signal supplied to a coil located near a switch element.

The inverter 340 converts an inputted DC (direct current) voltage to a three phase AC (alternate current) high voltage for driving a motor. A three phase output terminal of the inverter 340 is connected to each three phase input terminal of the drive motor 345. The inverter 340 controls an output voltage based on control signals from the battery management unit 311 or the vehicle ECU 380, which controls the whole operation of the vehicle.

The drive motor 345 is rotated by electric power supplied from the inverter 340. The rotation is transferred to an axle and driving wheels W, for example, through a differential gear unit.

The vehicle 300 also includes a regenerative brake mechanism, which is not shown though. The regenerative brake mechanism rotates the drive motor 345 when the vehicle 300 is braked, and converts kinetic energy to regenerative energy, which is electric energy. The regenerative energy, recovered in the regenerative brake mechanism, is inputted into the inverter 340 and converted to direct current. The direct current is inputted into the vehicle power source 302.

One terminal of a connecting line L1 is connected through a current detector (not shown) in the battery management unit 311 to the negative electrode terminal 317 of the vehicle power source 302. The other terminal of the connecting line L1 is connected to a negative electrode input terminal of the inverter 340.

One terminal of a connecting line L2 is connected through the switch unit 333 to the positive electrode terminal 316 of the vehicle power source 302. The other terminal of the connecting line L2 is connected to a positive electrode input terminal of the inverter 340.

The external terminal 370 is connected to the battery management unit 311. The external terminal 370 is able to connect, for example, to an external power source.

The vehicle ECU 380 cooperatively controls the battery management unit 311 together with other units in response to inputs operated by a driver or the like, thereby performing the management of the whole vehicle. Data concerning the security of the vehicle power source 302, such as a remaining capacity of the vehicle power source 302, are transferred between the battery management unit 311 and the vehicle ECU 380 through communication lines.

The vehicle according to the fourth approach includes the battery pack according to the third approach. The vehicle according to the fourth approach, therefore, has an excellent charge and discharge performance by virtue of including the battery pack having high energy density. Furthermore, since self-discharge of the battery pack is suppressed, reliability of the vehicle is high. In addition, the vehicle can exhibit high safety.

### [Examples]

Examples are explained below; however, the present disclosure is not limited to the following Examples so long as the scope of the present disclosure is not departed from.

### (Example 1)

In Example 1, a tripolar battery including an electrode group punched in a circle was produced by the following procedure.

### <Production of Positive Electrode>

To N-methyl pyrrolidone (NMP) were added 100 parts by weight of an LiMn₂O₄ powder as a positive electrode active material, 10 parts by weight of acetylene black as an electro-conductive agent, and 10 parts by weight of polyvinylidene fluoride (PVdF) as a binder, which were mixed to prepare a slurry. The prepared slurry was coated onto one surface of a current collector made of titanium foil with a thickness of 15 µm. After the coat of applied slurry was dried, the current collector and the coat were pressed to produce a positive electrode sheet having an electrode density of 2.5 g/cm³. The produced positive electrode sheet was punched into a round shape of ϕ 10 mm, thereby obtaining disk-shaped positive electrodes.

### <Production of Negative Electrode>

### (Preparation of Negative Electrode Active Material)

5% by weight of a solid electrolyte Li_{1.3}Al_{0.3}Ti_{1.7} (PO₄) ₃ was mixed with a Li₄Ti₅O₁₂ powder (100% by weight), serving as a parent material, in an ethanol solvent at 600 rpm for 3 hours by using a ball mill (Premium-Line P-7 manufactured by Fritsch Japan Co., Ltd.). The obtained mixed powder was fired in air at 450°C for 6 hours to prepare a negative electrode active material powder. Observation of the obtained negative electrode active material powder by TEM revealed that the powder contained the titanium-containing metal oxide particles including a Li₄Ti₅O₁₂ parent phase and the anatase type TiO₂ phase covering this parent phase, and a Li_{1.3}Al_{0.3}Ti_{1.7}(PO₄)₃ solid electrolyte phase covering the particle surface in an island-patch manner. As a result of measuring the average particle size of the titanium-containing metal oxide particles and the average particle size of the solid electrolyte as described above, an average particle size ratio of the solid electrolyte to the titanium-containing metal oxide particles was 0.05. As a result of performing XRD measurement on the prepared sample as described above, I_{SE}/I = 0.06 and I_{TiO2}/I = 0.08.

### (Production of Negative Electrode)

To NMP were added 100 parts by weight of the negative electrode active material powder obtained as described above, 10 parts by weight of acetylene black as an electro-conductive agent, and 10 parts by weight of PTFE as a binder, which were mixed to prepare a slurry. The prepared slurry was coated onto one surface of a current collector made of zinc foil with a thickness of 50 µm. After the coat of applied slurry was dried, the current collector and the coat were subjected to pressing to produce a negative electrode sheet having an electrode density of 2.5 g/cm³. The produced negative electrode sheet was punched into a circular shape of ϕ 10 mm, thereby obtaining disk-shaped negative electrodes.

### <Preparation of Electrolyte>

LiCl as the electrolyte salt was dissolved at a concentration of 12.0 M in water. In this manner, an aqueous LiCl solution was prepared to obtain an electrolyte. The concentration of the electrolyte was examined using the ion chromatography described above.

### <Production of Tripolar Battery>

First, a piece of hardened filter paper was punched into a round shape of ϕ 19 mm to obtain a separator. The negative electrode, the separator, and the positive electrode obtained as described above were stacked in this order on a titanium current collector to be pressure-bonded and fixed to a PP plate, and thus to prepare a laminate of positive and negative electrodes. Thereafter, 12 ml of an electrolyte was poured into a cylindrical glass cell, and a saturated calomel electrode was inserted as a reference electrode.

In this manner, an evaluation battery (tripolar battery) of Example 1 was produced.

Table 1 summarizes details of the titanium-containing oxide as the material of the parent phase and the materials used for the solid electrolyte phase. Specifically, regarding the parent phase material, the composition of the titanium-containing oxide and the potential (V vs. SCE) at which the lithium ion insertion/extraction reaction takes place are shown. Regarding the material of the solid electrolyte phase, the compound composition, the glass transition point Tg, the crystallization temperature Tc, and the addition amount are shown.

Table 2 summarizes the firing conditions for the mixed powder of the titanium-containing oxide (parent phase material) and the solid electrolyte, and the results of the XRD analysis on the negative electrode active material obtained by firing. Specifically, the firing conditions include the firing temperature T and the firing time. As results of the XRD analysis, the peak intensity ratio I_{SE}/I between the strongest intensity peak I_{SE} corresponding to the solid electrolyte phase and the strongest intensity peak I corresponding to the titanium-containing oxide phase (parent phase), and the peak intensity ratio I_{TiO2}/I between the strongest intensity peak I_{TiO2} corresponding to the anatase type TiO₂ phase and the peak I are shown. In addition, the average particle size ratio D_{SE}/D_{Ti} of the average particle size D_{SE} of the solid electrolyte powder (solid electrolyte phase) to the average particle size D_{Ti} of the titanium-containing metal oxide particles is shown. In addition, the composition of the compound used as the positive electrode active material is shown.

**[Table 1]**

| | Parent phase material | | Solid electrolyte phase | | | |
|---|---|---|---|---|---|---|
| | Composition | Li insertion /extraction potential (V vs. SCE) | Composition | Glass transition point Tg (°C) | Crystallization temperature Tc (°C) | addition amount (%) |
| Example 1 | Li₄Ti₅O₁₂ | -1.52 | Li_{1.3}Al_{0.3}Ti_{1.7}(PO₄) ₃ | 300 | 610 | 5 |
| Example 2 | Li₄Ti₅O₂₂ | -1.52 | Li₃PO₄ | 310 | 520 | 5 |
| Example 3 | Li₄Ti₅O₁₂ | -1.52 | Li_{2.9}PO_{3.3}N_{0.46} | 350 | 560 | 5 |
| Example 4 | Li₄Ti₅O₁₂ | -1.52 | LiNbO₃ | 334 | 456 | 5 |
| Example 5 | Li₂NaTi₅NbO₁₄ | -1.75 | Li_{1.3}Al_{0.3}Ti_{1.7}(PO₄)₃ | 300 | 610 | 5 |
| Example 6 | TiNb₂O₇ | -1.45 | Li_{1.3}Al_{0.3}Ti_{1.7} (PO₄)₃ | 300 | 610 | 5 |
| Example 7 | Li₄Ti₅O₁₂ | -1.52 | Li₃PO₄ | 310 | 520 | 5 |
| Example 8 | Li₄Ti₅O₁₂ | -1.52 | Li_{1.3}Al_{0. 3}Ti_{1.7} (PO₄)₃ | 300 | 610 | 5 |
| Example 9 | Li₄Ti₅O₁₂ | -1.52 | Li_{1.3}Al_{0.3} Ti_{1.7}(PO₄) ₃ | 300 | 610 | 10 |
| Example 10 | Li₄Ti₅O₁₂ | -1.52 | Li_{1.3}Al_{0.3}Ge_{1.7} (PO₄)₃ | 480 | 660 | 5 |
| Example 11 | Li₄Ti₅O₁₂ | -1.52 | La_{0.5}Li_{0.5}TiO₃ | n.d. | 950 | 5 |
| Example 12 | Li₄Ti₅O₁₂ | -1.52 | Li₃BO₃ | 290 | 550 | 5 |
| Example 13 | Li₄Ti₅O₁₂ | -1.52 | Li_{1.3}Al_{0.3}Ti_{1.7}(PO₄)₃ | 300 | 610 | 5 |
| Example 14 | Li₄Ti₅O₁₂ | -1.52 | Li_{1.3}Al_{0. 3}Ti_{1.7}(PO₄)₃ | 300 | 610 | 5 |
| Example 15 | Li₄Ti₅O₁₂ | -1.52 | Li_{1.3}Al_{0. 3}Ti_{1.7}(PO₄)₃ | 300 | 610 | 5 |
| Example 16 | Li₄Ti₅O₁₂ | -1.52 | Li_{1.3}Al_{0.3}Ti_{1.7}(PO₄)₃ | 300 | 610 | 5 |
| Example 17 | Li₄Ti₅O₁₂ | -1.52 | Li₇La₃Zr₂O₁₂ | n.d | 800 | 5 |

**[Table 2]**

| | Firing temperature T (°C) | Firing time (hr) | I_{SE}/I | I_{Tio2}/I | D_{SE}/D_{Ti} | Positive electrode active material |
|---|---|---|---|---|---|---|
| Example 1 | 450 | 6 | 0.06 | 0.08 | 0.05 | LiMn₂O₄ |
| Example 2 | 450 | 6 | 0.10 | 0.12 | 0.10 | LiMn₂O₄ |
| Example 3 | 450 | 6 | 0.12 | 0.17 | 0.09 | LiMn₂O₄ |
| Example 4 | 450 | 6 | 0.25 | 0.15 | 0.22 | LiMn₂O₄ |
| Example 5 | 450 | 6 | 0.07 | 0.10 | 0.14 | LiMn₂O₄ |
| Example 6 | 450 | 6 | 0.08 | 0.09 | 0.16 | LiMn₂O₄ |
| Example 7 | 450 | 6 | 0.10 | 0.15 | 0.20 | LiNi_{0.33}Co_{0.33}Mn_{0.33}O₄ |
| Example 8 | 600 | 6 | 0.05 | 0.20 | 0.05 | LiMn₂O₄ |
| Example 9 | 450 | 6 | 0.21 | 0.20 | 0.05 | LiMn₂O₄ |
| Example 10 | 500 | 6 | 0.10 | 0.14 | 0.10 | LiMn₂O₄ |
| Example 11 | 450 | 6 | 0.12 | 0.16 | 0.09 | LiMn₂O₄ |
| Example 12 | 450 | 6 | 0.14 | 0.13 | 0.08 | LiMn₂O₄ |
| Example 13 | 450 | 12 | 0.08 | 0.16 | 0.05 | LiMn₂O₄ |
| Example 14 | 600 | 12 | 0.12 | 0.28 | 0.05 | LiMn₂O₄ |
| Example 15 | 600 | 48 | 0.20 | 0.42 | 0.05 | LiMn₂O₄ |
| Example 16 | 450 | 0.5 | 0.04 | 0.04 | 0.05 | LiMn₂O₄ |
| Example 17 | 450 | 6 | 0.07 | 0.12 | 0.15 | LiMn₂O₄ |

### (Examples 2 to 7)

Various compounds listed in Table 1 were used as the materials of the solid electrolyte phase and the materials of the titanium-containing oxide phase. The TEM observation of each obtained negative electrode active material powder revealed that the negative electrode active material powder, including titanium-containing metal oxide particles including various titanium-containing oxide phases and the anatase type TiO₂ phase covering the titanium-containing oxide phase and various solid electrolyte phases covering the particle surface in island-patch manner, was obtained in each example. The compounds listed in Table 2 were used as the positive electrode active materials. In Examples 2 to 7, an evaluation battery was produced in the same manner as in Example 1 except for these points.

### (Example 8)

The firing temperature at the time of firing the mixed powder of the titanium-containing oxide (parent phase material) and the solid electrolyte was changed to 600°C. The TEM observation revealed that the negative electrode active material powder including the titanium-containing metal oxide particles containing the Li₄Ti₅O₁₂ parent phase and the anatase type TiO₂ phase covering this parent phase, and the Li_{1.3}Al_{0.3}Ti_{1.7}(PO₄)₃ solid electrolyte phase covering the particle surface in the island-patch manner was obtained. In Example 8, an evaluation battery was produced in the same manner as in Example 1 except that the obtained negative electrode active material powder was used.

### (Example 9)

The amount of the solid electrolyte powder added was changed to 10% by weight. The TEM observation revealed that the negative electrode active material powder including the titanium-containing metal oxide particles containing the Li₄Ti₅O₁₂ parent phase and the anatase type TiO₂ phase covering this parent phase, and the Li_{1.3}Al_{0.3}Ti_{1.7}(PO₄)₃ solid electrolyte phase covering the particle surface in island-patch manner was obtained. In Example 9, an evaluation battery was produced in the same manner as in Example 1 except that the obtained negative electrode active material powder was used.

### (Examples 10 to 12)

Various compounds listed in Table 1 were used as the materials of the solid electrolyte phase. In Example 10, the firing temperature was changed to 500°C according to the glass transition point Tg of the solid electrolyte material Li_{1.3}Al_{0.3}Ge_{1.7}(PO₄)₃ used. Since La_{0.5}Li_{0.5}TiO₃ used in Example 11 was a material not exhibiting a glass transition point, the glass transition point Tg was not determinable. The TEM observation revealed that the negative electrode active material powder including the titanium-containing metal oxide particles including the Li₄Ti₅O₁₂ parent phase and the anatase type TiO₂ phase covering this parent phase, and various solid electrolyte phases covering the particle surface in island-patch manner was obtained in each example. In Examples 10 to 12, an evaluation battery was produced in the same manner as in Example 1 except that the obtained negative electrode active material powder was used.

### (Example 13)

The firing time at the time of firing the mixed powder of the titanium-containing oxide (parent phase material) and the solid electrolyte was changed to 12 hours. The TEM observation revealed that the negative electrode active material powder including the titanium-containing metal oxide particles containing the Li₄Ti₅O₁₂ parent phase and the anatase type TiO₂ phase covering this parent phase, and the Li_{1.3}Al_{0.3}Ti_{1.7}(PO₄)₃ solid electrolyte phase covering the particle surface in island-patch manner was obtained. In Example 13, an evaluation battery was produced in the same manner as in Example 1 except that the obtained negative electrode active material powder was used.

### (Example 14)

At the time of firing the mixed powder of the titanium-containing oxide (parent phase material) and the solid electrolyte, the firing temperature was changed to 600°C, and the firing time was changed to 12 hours. The TEM observation revealed that the negative electrode active material powder including the titanium-containing metal oxide particles containing the Li₄Ti₅O₁₂ parent phase and the anatase type TiO₂ phase covering this parent phase, and the Li_{1.3}Al_{0.3}Ti_{1.7}(PO₄)₃ solid electrolyte phase covering the particle surface in island-patch manner was obtained. In Example 14, an evaluation battery was produced in the same manner as in Example 1 except that the obtained negative electrode active material powder was used.

### (Example 15)

At the time of firing the mixed powder of the titanium-containing oxide (parent phase material) and the solid electrolyte, the firing temperature was changed to 600°C, and the firing time was changed to 48 hours. The TEM observation revealed that the anatase type TiO₂ phase was densely formed on the surface of the titanium-containing metal oxide particles whose bulk is composed of the Li₄Ti₅O₁₂ phase, and the Li_{1.3}Al_{0.3}Ti_{1.7}(PO₄)₃ solid electrolyte phase was distributed in island-patch manner. In Example 15, an evaluation battery was produced in the same manner as in Example 1 except for these points.

### (Example 16)

The firing time at the time of firing the mixed powder of the titanium-containing oxide (parent phase material) and the solid electrolyte was changed to 0.5 hours. The TEM observation of the obtained negative electrode active material powder revealed that the anatase type TiO₂ phase was sparsely present on the surface of the titanium-containing metal oxide particles whose bulk is composed of the Li₄Ti₅O₁₂ phase, and the Li_{1.3}Al_{0.3}Ti_{1.7}(PO₄)₃ solid electrolyte phase was distributed in the form of islands so as to be in contact with the anatase type TiO₂ phase. In Example 16, an evaluation battery was produced in the same manner as in Example 1 except that the obtained negative electrode active material powder was used.

### (Example 17)

As the solid electrolyte, Li₇La₃Zr₂O₁₂ was used. The TEM observation revealed that the negative electrode active material powder included the titanium-containing metal oxide particles including the Li₄Ti₅O₁₂ parent phase and the anatase type TiO₂ phase covering this parent phase, and a Li₇La₃Zr₂O₁₂ solid electrolyte phase covering the particle surface in island-patch manner. In Example 17, an evaluation battery was produced in the same manner as in Example 1 except that the obtained negative electrode active material powder was used.

Table 3 summarizes details of the titanium-containing oxide as the material of the parent phase and the materials used for the solid electrolyte phase in the following comparative examples. Specifically, Table 3 shows details of the comparative examples in the same manner as the details of the above examples in Table 1.

Table 4 summarizes the firing conditions, the results of the XRD analysis, the average particle size ratio D_{SE}/D_{Ti}, and the composition of the positive electrode active material in the following comparative examples. Specifically, Table 4 shows details of the comparative examples in the same manner as the details of the above examples in Table 2.

**[Table 3]**

| | Parent phase material | | Solid electrolyte phase | | | |
|---|---|---|---|---|---|---|
| | Composition | Li insertion /extraction potential (V vs. SCE) | Composition | Glass transition point Tg (°C) | Crystallization temperature Tc (°C) | addition amount (%) |
| Comparative Example 1 | Li₄Ti₅O₁₂ | -1.52 | - | - | - | - |
| Comparative Example 2 | Li₂NaTi₅NbO₁₄ | -1.75 | - | - | - | - |
| Comparative Example 3 | TiNb₂O₇ | -1.45 | - | - | - | - |
| Comparative Example 4 | Li₄Ti₅O₁₂ | -1.52 | - | - | - | - |
| Comparative Example 5 | Li₄Ti₅O₁₂ | -1.52 | Li_{1.3}Al_{0.3}Ti_{1.7} (PO₄)₃ | 300 | 610 | 5 |
| Comparative Example 6 | Li₄Ti₅O₁₂ | -1.52 | Li_{1.3}Al_{0.3}Ti_{1.7} (PO₄)₃ | 300 | 610 | 5 |

**[Table 4]**

| | Firing temperature T (°C) | Firing time (hr) | I_{SE}/I | I_{Tio2}/I | D_{SE}/D_{Ti} | Positive electrode active material |
|---|---|---|---|---|---|---|
| Comparative Example 1 | 450 | 6 | - | - | - | LiMn₂O₄ |
| Comparative Example 2 | 450 | 6 | - | - | - | LiMn₂O₄ |
| Comparative Example 3 | 450 | 6 | - | - | - | LiMn₂O₄ |
| Comparative Example 4 | 450 | 6 | - | - | - | LiNi_{0.33}Co_{0.33}Mn_{0.33}O₄ |
| Comparative Example 5 | - | - | 0.40 | 0.43 | 0.05 | LiMn₂O₄ |
| Comparative Example 6 | - | - | 0.09 | - | 0.05 | LiMn₂O₄ |

### (Examples 2 to 7)

Various compounds listed in Table 3 were used as the materials of the titanium-containing oxide phase, and the compounds listed in Table 4 were used as the positive electrode active materials. No solid electrolyte was used. In Comparative Examples 1 to 4, an evaluation battery was produced in the same manner as in Example 1 except for these points.

### (Comparative Example 5)

A Li₄Ti₅O₁₂ powder, an anatase type TiO₂ powder, and a Li_{1.3}Al_{0.3}Ti_{1.7}(PO₄)₃ powder were weighed out at a weight ratio of 100:10:10 and mixed in a mortar to obtain a mixed powder, and the obtained mixed powder was used as the negative electrode active material. The negative electrode active material was used as it was for the production of the negative electrode, without carrying out any process such as firing. The TEM observation revealed that a mixed powder in which the Li₄Ti₅O₁₂ powder, the anatase type TiO₂ powder, and the Li_{1.3}Al_{0.3}Ti_{1.7}(PO₄)₃ powder were evenly mixed was obtained. In Comparative Example 5, an evaluation battery was produced in the same manner as in Example 1 except that the obtained negative electrode active material powder was used.

### (Comparative Example 6)

After the titanium-containing oxide (parent phase material) and the solid electrolyte were mixed, the mixed powder was not fired. The TEM observation revealed that a mixed powder in which the Li₄Ti₅O₁₂ powder and the Li_{1.3}Al_{0.3}Ti_{1.7}(PO₄) ₃ powder were evenly mixed was obtained. In Comparative Example 6, an evaluation battery was produced in the same manner as in Example 1 except that the mixed powder was used as the negative electrode active material.

### <Charge-Discharge Test>

A charge-discharge test was carried out on each of the obtained evaluation batteries as follows.

The potential of the negative electrode was controlled with respect to the reference electrode, and a constant current charge-discharge test was conducted under an environment of 25°C. For both charging and discharging, the current value was 1C rate with reference to an actual capacity of the material of the titanium-containing oxide phase (parent phase). The charging end voltage was set to -1.6 V. After the voltage has reached the charging end voltage, charging was continued at a constant voltage, and when the current value converged to a value corresponding to C/2 rate, or after the charging time of 72 minutes had elapsed, the charging was terminated. After the termination of charging, discharging was started immediately, and discharging was terminated once the end voltage had reached -1.3 V. This charge and discharge cycle was continuously carried out ten times. A capacity ratio in charging and discharging (discharge capacity/charge capacity) at each cycle was defined as charge-discharge efficiency, and the average in 10 cycles was calculated.

Tables 5 and 6 shows average charge-discharge efficiency obtained as a result of the charge-discharge test for each evaluation battery.

**[Table 5]**

| | 1C charge-discharge efficiency (%) |
|---|---|
| Example 1 | 77.2 |
| Example 2 | 70.5 |
| Example 3 | 72.8 |
| Example 4 | 70.7 |
| Example 5 | 72.5 |
| Example 6 | 73.4 |
| Example 7 | 71.8 |
| Example 8 | 74.6 |
| Example 9 | 79.8 |
| Example 10 | 79.5 |
| Example 11 | 72.1 |
| Example 12 | 75.0 |
| Example 13 | 76.7 |
| Example 14 | 74.3 |
| Example 15 | 64.2 |
| Example 16 | 65.4 |
| Example 17 | 64.4 |

**[Table 6]**

| | 1C charge-discharge efficiency (%) |
|---|---|
| Comparative Example 1 | 63.2 |
| Comparative Example 2 | 57.8 |
| Comparative Example 3 | 60.3 |
| Comparative Example 4 | 52.1 |
| Comparative Example 5 | 58.8 |
| Comparative Example 6 | 63.5 |

As can be seen from the results of the charge-discharge test shown in Tables 5 and 6, the charge-discharge efficiency of the evaluation batteries of Examples 1 to 17 was higher than the charge-discharge efficiency of the evaluation batteries of Comparative Examples 1 to 6. This is believed to be because self-discharge was suppressed in Examples 1 to 17.

In Example 15, the peak intensity ratio I_{TiO2}/I in the XRD spectrum was higher than those in Examples 1 to 14. This is believed to be because the anatase type TiO₂ phase was excessively formed because the firing temperature was high and the firing time was long. In Example 15, it is considered that since the amount of anatase type TiO₂ was excessive, extraction and insertion of lithium ions from and into the negative electrode active material were inhibited. For this reason, it is considered that although a self-discharge suppressing effect by the anatase type TiO₂ phase was obtained, as compared with the case where the peak intensity ratio I_{TiO2}/I was 0.05 or more and 0.3 or less, the resistance was large, and the capacity was reduced, so that the charge-discharge efficiency was relatively low.

In Example 16, the peak intensity ratio I_{TiO2}/I in the XRD spectrum was lower than those in Examples 1 to 14. This is believed to be because the formation amount of the anatase type TiO₂ phase was small because the firing time was short. It is considered that as a result, the uniformity and denseness of distribution of the anatase type TiO₂ phase on the particle surface of the titanium-containing oxide were not high, and thereby, the effect of suppressing self-discharge was not as strong. It is considered that the charge-discharge efficiency was relatively low, as a result.

The reason why the charge-discharge efficiency in Example 17 was lower than that in Examples 1 to 14 is considered to be attributed to the use of Li₇La₃Zr₂O₁₂ as the solid electrolyte. After the test, the evaluation battery was disassembled by the method described above, and TEM observation was carried out, whereby it was observed that the crystal structure of the Li₇La₃Zr₂O₁₂ solid electrolyte phase had degraded. A solid electrolyte such as Li₇La₃Zr₂O₁₂ has a relatively high reactivity with water. It is considered that as a result of deterioration of the solid electrolyte phase due to a reaction between the solid electrolyte and water, the effect of suppressing self-discharge was reduced, and the charge-discharge efficiency decreased.

In the negative electrode active materials prepared in Comparative Examples 1 to 4 and 6, peaks attributable to anatase type TiO₂ could not be detected in the XRD spectrum. It is considered that the potential at the surface of the negative electrode active material particles, that is, at the contact interface with water in the electrolyte could not be sufficiently increased due to the absence of the anatase type TiO₂ phase. It is considered that as a result, an electrolysis reaction of water proceeded, and the charge-discharge efficiency decreased due to self-discharge.

In Comparative Example 5, both the peak intensity ratios I_{SE}/I and I_{TiO2}/I in the XRD spectrum were high. This is believed to be because a relatively large amount of solid electrolyte Li_{1.3}Al_{0.3}Ti_{1.7}(PO₄) ₃ powder and anatase type TiO₂ powder were mixed with respect to the titanium-containing oxide Li₄Ti₅O₁₂ powder. The reason why the charge-discharge efficiency was low despite the inclusion of the solid electrolyte and the anatase type TiO₂ is considered that the negative electrode active material was a mixed powder in which the titanium-containing oxide powder, the solid electrolyte powder, and the anatase type TiO₂ powder were simply mixed. It is considered that due to simple mixing, composite particles of the titanium-containing oxide, the anatase type TiO₂, and the solid electrolyte could not be formed. In addition, it is presumed that it was not possible to uniformly and densely distribute anatase type TiO₂ on the particle surface of the titanium-containing oxide. It is considered that the effect of suppressing self-discharge was not obtained, as a result. In more detail, it is considered that the electrolysis reaction of water between the titanium-containing oxide Li₄Ti₅O₁₂ and water in the electrolyte proceeded, and self-discharge could not be suppressed, so that the charge-discharge efficiency decreased.

According to at least one approach and example described above, a secondary battery including a positive electrode, a negative electrode, and an electrolyte is provided. The negative electrode contains a negative electrode active material. The negative electrode active material includes titanium-containing metal oxide particles, an anatase type TiO₂ phase, and a solid electrolyte phase. The anatase type TiO₂ phase and the solid electrolyte phase are each disposed on at least a portion of the surface of the titanium-containing metal oxide particles. The electrolyte contains an electrolyte salt and water. According to such a configuration, it is possible to provide a secondary battery which has high safety because of use of an electrolyte containing a water-based solvent and exhibits a high energy density because of a high battery voltage and in which self-discharge is suppressed, a battery pack including the secondary battery, and a vehicle installed with the battery pack.

The present disclosure also encompasses the following approaches of active materials:
1. A secondary battery comprising:
   a positive electrode;
   a negative electrode comprising a negative electrode active material, the negative electrode active material comprising titanium-containing metal oxide particles, an anatase type TiO₂ phase, and a solid electrolyte phase, each of the anatase type TiO₂ phase and the solid electrolyte phase being disposed on at least a portion of a surface of the titanium-containing metal oxide particles; and
   an electrolyte comprising an electrolyte salt and water.
2. The secondary battery according to clause 1, wherein the solid electrolyte phase comprises at least one selected from the group consisting of a compound represented by Li₁₊ₓM1ₓM2₂₋ₓ(PO₄)₃ for which M1 is Al, M2 is at least one selected from the group consisting of Ge and Ti, and 0.05 ≤ x ≤ 0.5, a compound represented by LiMO₃ for which M is at least one selected from the group consisting of Nb and La, a compound represented by Ln_{2/3-x}Li₃ₓTiO₃ for which Ln is at least one selected from the group consisting of La, Pr, Nd, and Sm, and 0.04 ≤ x ≤ 0.14, a compound represented by LiₓPO_{y}N_{z} for which 2.6 ≤ x ≤ 3.5, 1.9 ≤ y ≤ 3.8, and 0.1 ≤ z ≤ 1.3, Li₃BO₃, and Li₄SiO₄.
3. The secondary battery according to clause 1 or 2, wherein the titanium-containing metal oxide particles comprise a titanium-containing oxide phase and the anatase type TiO₂ phase.
4. The secondary battery according to clause 3, wherein in an X-ray diffraction spectrum with respect to the negative electrode active material, a peak intensity I of a strongest peak attributable to the titanium-containing oxide phase, a peak intensity I_{SE} of a strongest peak attributable to the solid electrolyte phase, and a peak intensity I_{TiO2} of a strongest peak attributable to the anatase type TiO₂ phase satisfy a relationship of 0.05 ≤ I_{SE}/I ≤ 0.3 and 0.05 ≤ I_{TiO2}/I ≤ 0.3.
5. The secondary battery according to clause 3 or 4, wherein the titanium-containing oxide phase comprises at least one titanium-containing oxide selected from the group consisting of an oxide of titanium, a lithium titanium oxide, a niobium titanium oxide, and an orthorhombic Na-containing niobium-titanium composite oxide.
6. The secondary battery according to any one of clauses 1 to 5, wherein the positive electrode comprises at least one compound selected from the group consisting of an oxide of transition metal represented by general formula LiₓMO₂ for which M is at least one selected from Mn, Co, and Ni, and 0 ≤ x ≤ 1, a lithium-manganese-nickel composite oxide represented by general formula LiₓMn_{2-y}Ni_{y}O₄ for which 0 < x ≤ 1 and 0 < y < 2, a lithium nickel-cobalt-manganese composite oxide represented by general formula LiₓNi_{1-y-z}Co_{y}MnₓO₂ for which 0 < x ≤ 1, 0 < y < 1, 0 < z < 1, and y + z < 1, a phosphate compound represented by general formula LiₓFePO₄ for which 0 ≤ x ≤ 1, and a phosphate compound represented by general formula LiₓMnPO₄ for which 0 ≤ x ≤ 1.
7. The secondary battery according to any one of clauses 1 to 6, wherein the electrolyte salt comprises at least one selected from the group consisting of lithium nitrate, lithium chloride, lithium sulfate, and lithium hydroxide.
8. A battery pack comprising the secondary battery according to any one of clauses 1 to 7.
9. The battery pack according to clause 8, wherein the battery pack further comprises an external power distribution terminal and a protective circuit.
10. The battery pack according to clause 8 or 9 comprising a plural of the secondary battery, the secondary batteries being electrically connected in series, in parallel, or in combination of in series and in parallel.
11. A vehicle comprising the battery pack according to any one of clauses 8 to 10.
12. The vehicle according to clause 11, which comprises a mechanism configured to convert kinetic energy of the vehicle into regenerative energy.

While certain approaches have been described, these approaches have been presented by way of example only, and are not intended to limit the scope of the claims. Indeed, the apparatuses described herein may be embodied in a variety of other forms; furthermore, various omissions, substitutions and changes in the form of the apparatuses described herein may be made.

## Claims

1. A secondary battery comprising:
a positive electrode (2);
a negative electrode (6) comprising a negative electrode active material, the negative electrode active material comprising titanium-containing metal oxide particles, an anatase type TiO₂ phase, and a solid electrolyte phase, each of the anatase type TiO₂ phase and the solid electrolyte phase being disposed on at least a portion of a surface of the titanium-containing metal oxide particles; and
an electrolyte comprising an electrolyte salt and water.

2. The secondary battery according to claim 1, wherein the solid electrolyte phase comprises at least one selected from the group consisting of a compound represented by Li₁₊ₓM1ₓM2₂₋ₓ(PO₄)₃ for which M1 is Al, M2 is at least one selected from the group consisting of Ge and Ti, and 0.05 ≤ x ≤ 0.5, a compound represented by LiMO₃ for which M is at least one selected from the group consisting of Nb and La, a compound represented by Ln_{2/3-x}Li₃ₓTiO₃ for which Ln is at least one selected from the group consisting of La, Pr, Nd, and Sm, and 0.04 ≤ x ≤ 0.14, a compound represented by LiₓPO_{y}N_{z} for which 2.6 ≤ x ≤ 3.5, 1.9 ≤ y ≤ 3.8, and 0.1 ≤ z ≤ 1.3, Li₃BO₃, and Li₄SiO₄.

3. The secondary battery according to claim 1 or 2, wherein the titanium-containing metal oxide particles comprise a titanium-containing oxide phase and the anatase type TiO₂ phase.

4. The secondary battery according to claim 3, wherein in an X-ray diffraction spectrum with respect to the negative electrode active material, a peak intensity I of a strongest peak attributable to the titanium-containing oxide phase, a peak intensity I_{SE} of a strongest peak attributable to the solid electrolyte phase, and a peak intensity I_{TiO2} of a strongest peak attributable to the anatase type TiO₂ phase satisfy a relationship of 0.05 ≤ I_{SE}/I ≤ 0.3 and 0.05 ≤ I_{TiO2}/I ≤ 0.3.

5. The secondary battery according to claim 3 or 4, wherein the titanium-containing oxide phase comprises at least one titanium-containing oxide selected from the group consisting of an oxide of titanium, a lithium titanium oxide, a niobium titanium oxide, and an orthorhombic Na-containing niobium-titanium composite oxide.

6. The secondary battery according to any one of claims 1 to 5, wherein the positive electrode (2) comprises at least one compound selected from the group consisting of an oxide of transition metal represented by general formula LiₓMO₂ for which M is at least one selected from Mn, Co, and Ni, and 0 ≤ x ≤ 1, a lithium-manganese-nickel composite oxide represented by general formula LiₓMn_{2-y}Ni_{y}O₄ for which 0 < x ≤ 1 and 0 < y < 2, a lithium nickel-cobalt-manganese composite oxide represented by general formula LiₓNi_{1-y-z}Co_{y}Mn_{z}O₂ for which 0 < x ≤ 1, 0 < y < 1, 0 < z < 1, and y + z < 1, a phosphate compound represented by general formula LiₓFePO₄ for which 0 ≤ x ≤ 1, and a phosphate compound represented by general formula LiₓMnPO₄ for which 0 ≤ x ≤ 1.

7. The secondary battery according to any one of claims 1 to 6, wherein the electrolyte salt comprises at least one selected from the group consisting of lithium nitrate, lithium chloride, lithium sulfate, and lithium hydroxide.

8. A battery pack comprising the secondary battery (51) according to any one of claims 1 to 7.

9. The battery pack according to claim 8, wherein the battery pack further comprises an external power distribution terminal (59) and a protective circuit (58).

10. The battery pack according to claim 8 or 9 comprising a plural of the secondary battery (51), the secondary batteries (51) being electrically connected in series, in parallel, or in combination of in series and in parallel.

11. A vehicle (200) comprising the battery pack (202) according to any one of claims 8 to 10.

12. The vehicle (200) according to claim 11, which comprises a mechanism configured to convert kinetic energy of the vehicle (200) into regenerative energy.
